# EUROPÄISCHE PATENTSCHRIFT

(11) **EP 2 061 956 B1**
(45) Veröffentlichungstag und Bekanntmachung des Hinweises auf die Patenterteilung: **17.03.2010**
(21) Anmeldenummer: 07817512.2
(22) Anmeldetag: 13.09.2007
(51) Int. Cl.: F01N 3/20, F04B 43/067

(54) **ABGASNACHBEHANDLUNGSSYSTEM**
EXHAUST-GAS AFTERTREATMENT SYSTEM
SYSTÈME DE RETRAITEMENT DES GAZ D'ÉCHAPPEMENT

(30) Priorität: 16.09.2006 DE 102006044246
(43) Veröffentlichungstag der Anmeldung: 27.05.2009
(73) Patentinhaber: THOMAS MAGNETE GmbH, 57557 Herdorf (DE)
(72) Erfinder: MÜLLER, Michael, 53773 Hennef (DE); ROLLAND, Thomas, 57584 Wallmenroth (DE); OHLIGSCHLÄGER, Olaf, 57520 Grünebach (DE); ALKEN, Johannes, 57076 Siegen (DE); SCHLESINGER, Uwe, 57290 Neunkirchen (DE)
(74) Vertreter: Sparing, Rolf Klaus
(86) Internationale Anmeldenummer: PCT/DE2007/001639
(87) Internationale Veröffentlichungsnummer: WO 2008/031421

(56) Entgegenhaltungen:
- EP-A- 1 676 988
- DE-A1- 4 230 056
- DE-A1- 10 048 246
- DE-A1- 10 161 132
- DE-A1-102004 050 023
- DE-U1- 8 437 633
- US-A- 5 624 246
- US-B1- 6 705 111

## Beschreibung

DE 10 2004 050 023 A1 zeigt ein System zur Nachbehandlung eines Abgases eines Verbrennungsmotors mit einem Reduktionsmittel, umfassend einen Tank, der das Reduktionsmittel enthält und über eine Leitung mit der Düse verbunden ist, wobei die Düse in ein Abgasrohr mündet, und eine Dosierpumpe, wobei die Dosierpumpe zwischen einer weiteren Leitung und der Leitung angeordnet ist, und wobei die Dosierpumpe das Reduktionsmittel vom Tank unter Druck zur Düse fördert, um das Reduktionsmittel mittels Düse in das Abgasrohr einzuspritzen. Eine besondere Ausführung der Dosierpumpe ist eine elektrisch angetriebene Membranpumpe, die einen Ankerkolben aufweist, der in Richtung der Membran längsverschieblich durch eine Spule antreibbar und mit der Membran in Kontakt steht, sodass ein Senken und Heben der Membran erreicht ist.

Im Stand der Technik sind Dosierpumpen in Form von Kolbenpumpen bekannt, zum Beispiel aus DE 4328621 A1 und DE 10 2004 002 245 A1. Hierbei laufen die Teile des Antriebs, namentlich der elektromagnetische Anker und die Gleitlager/Kolben-Kombination im zu fördernden Medium. Die bewegten Teile der Kolbenpumpe stehen in Kontakt mit dem zu fördernden Fluid und sind ggf. dadurch geschmiert. Ein aggressives Fluid neigt im Fall der Trocknung in der Regel zum Auskristallisieren. Hierdurch würde ein Betrieb der Kolbenpumpe durch ein Verklemmen bzw. Festsetzen der bewegten Teile in Folge des festen Fluids gestört oder zumindest beeinträchtigt. Bei einer flüssigen Harnstofflösung kann es im Falle der Trocknung zu dem genannten Auskristallisieren von festen Stoffen kommen. Deshalb sind solche Kolbenpumpen nicht zur Förderung eines aggressiven Fluids wie zum Beispiel eine Harnstofflösung geeignet.

Bei der Dosierung von fließfähigen Stoffen, insbesondere von Flüssigkeiten, ist der Einsatz von Förderpumpen in Form von Membranpumpen bekannt, die sich durch eine leckagefreie Arbeitsweise auszeichnen. Im Gegensatz zu einer direkt angetriebenen Hubkolbenpumpe steht bei einer Membranpumpe ein Verdrängerkolben nicht direkt mit einem Förderfluid in Verbindung. Solche Förderpumpen kommen insbesondere bei der Förderung eines aggressiven Fluids wie zum Beispiel eine Harnstoff-Wasser-Lösung für einen Abgasreinigungsprozess bei Kfz-Dieselmotoren zum Einsatz. Ein solcher Abgasreinigungsprozess ist auch unter der Bezeichnung "selektive katalytische Reduktion", kurz: SCR, bekannt.

Mittels der SCR-Technologie wird ein Dieselmotor auf maximale Effizienz und grenzwertkonforme Partikelemissionen eingestellt. Durch den Einsatz dieser Technologie lassen sich die Grenzwertstufen Euro 4 und Euro 5 für die Stickoxidemissionen erreichen. Diese Entstickungstechnologie erfordert ein Reduktionsmittel. Zumeist wird als Reduktionsmittel AdBlue^{™} verwendet. Hierbei handelt es sich um eine wässrige Harnstofflösung, die in den Abgasstrom eingedüst und das benötigte Reduktionsmittel, nämlich Ammoniak für die SCR-Reaktionen im Katalysator freisetzt. Hierdurch werden die NOₓ-Emissionen der Dieselabgase wirkungsvoll reduziert und gleichzeitig der Dieselmotor auf einen günstigen Wirkungsgrad hin optimiert. Vorteilhaft resultieren hieraus ein geringer Kraftstoffverbrauch und niedrige Partikelemissionen.

Das Reduktionsmittel AdBlue^{™} stellt aufgrund seiner spezifischen Eigenschaften im Detail sehr hohe Entwicklungsanforderungen an die Abgasnachbehandlungssysteme, mit denen eine Entstickung durchgeführt wird, hinsichtlich Frostfestigkeit, Verstopfung bei erhöhten Temperaturen durch Kristallisation sowie Materialverträglichkeit der Medium führenden Komponenten.

DE 10 2004 011 123 A1 zeigt eine Förderpumpe für ein Abgasnachbehandlungsmedium, insbesondere eine Harnstoff-Wasser-Lösung für Dieselmotoren, die bei einem SCR-Verfahren eingesetzt wird. Die Dosierung des Mediums erfordert jedoch neben der Förderpumpe eine zusätzliche Dosiereinrichtung. Ein weiterer Nachteil dieser Pumpe liegt darin, dass wegen eines direkten mechanischen Antriebs einer Membran durch einen Hubmagneten vergleichsweise hohe Antriebskräfte erforderlich sind. Dies kann auch zu ungenauen Förderraten führen.

Neben einem mechanischen Direktantrieb einer Membran, die durch einen Hubmagneten direkt angesteuert wird, sind insbesondere im Bereich von Chemiepumpen auch solche bekannt, bei denen eine Membran hydraulisch angetrieben wird. Die oszillierende Bewegung eines Förderkolbens wird über eine Hydraulikvorlage in einem Membranarbeitsraum auf eine Membran übertragen, die den eigentlichen Förderraum, der mit dem zu fördernden Fluid gefüllt ist, gegenüber der Atmosphäre abdichtet. Im Unterschied zu einer direkt mittels eines Hubkolbens angetriebenen Membran arbeitet eine hydraulisch abgestützte Membran stets druckausgeglichen und ist deshalb für höhere Förderdrücke mit höheren Leistungen geeignet. Im Vergleich zu einem mechanischen Direktantrieb der Membran stellt sich wegen der hohen Drucksteifigkeit des hydraulischen Prinzips auch eine höhere Dosiergenauigkeit ein.

Die DE-U-8437633 zeigt eine hydraulisch angetriebene Membranpumpe, bei der ein Hydraulikraum einen Membranarbeitsraum und einen davon durch die Membran getrennten Förderraum umfasst. Die genaue Förder- und Dosiermenge des geförderten Fluids im Förderraum der Pumpe stellt sich hierbei durch die Hublänge des Kolbens in dem Membranarbeitsraum ein. Die Hublänge des Kolbens variiert zwischen einer Kolbenanfangs- und Kolbenendstellung in Abhängigkeit von Antriebselementen wie der Kolbenlänge und der Frequenz der Bewegung. Aufgrund einer Vielzahl von zu berücksichtigenden Parametern ist eine exakte Dosierung des zu fördernden Mediums nicht möglich. Vor allem bei kleinem Hubraum und geringem Hub des Kolbens machen sich diese Nachteile bemerkbar.

Ein weiterer Nachteil der Pumpe gemäß der DE-U-8437633 besteht darin, dass sie sich auf Grund ihrer robusten Bauart nicht zum Einbau in einem Kraftfahrzeug eignet. Um Gasblasen aus dem Membranarbeitsraum entlüften zu können, sind an der geodätisch höchsten Stelle des Membranarbeitsraums Entlüftungskanäle angeschlossen, die ins Freie oder in einen geeigneten Behälter ausmünden. Insofern ist ein Betrieb dieser Pumpe in einer vorbestimmten Lageorientierung erforderlich. Anders ausgedrückt ist ein Betrieb dieser Pumpe nicht lageunabhängig möglich.

Die vorstehend genannten verschiedenen Arten von Dosierpumpen werden bei Abgasnachbehandlungssystemen eingesetzt, bei denen ein Reduktionsmittel in das Abgas vor einem Katalysator eingespritzt wird, so dass in dem Katalysator die eigentliche Reduktion ablaufen kann. In der DE 100 47 512 A1 ist ein solches Abgasnachbehandlungssystem gezeigt, das eine Dosierpumpe zum Einspritzen eines Reduktionsmittels umfasst. Bei dem Reduktionsmittel handelt es sich um eine Harnstoff-Wasser-Lösung, die aus einem separaten Tank mittels der Dosierpumpe an eine Einspritzdüse bzw. eine Lochblende zugeführt wird. Die Dosierpumpe ist über einen Schrittmotor drehzahl- bzw. drehwinkelgesteuert. Somit handelt es sich bei der Dosierpumpe um eine elektrisch angetriebene Pumpe, mit entsprechend hohem Regelungsaufwand.

Auf dem 14. Aachener Kolloquium für Fahrzeug- und Motorentechnik 2005 wurde ein Abgasnachbehandlungssystem zur Reduktion von Stickoxiden in Dieselabgasen vorgestellt. Bei dem vorgestellten System wird eine wässrige Harnstofflösung, bekannt unter dem Namen AdBlue, in den Abgasstrom eingedüst, wobei das benötigte Reduktionsmittel, nämlich Ammoniak, für die SCR-Reaktion am Katalysator freigesetzt wird. Die wässrige Harnstofflösung wird aus einem Zusatztank mittels einer Dosierpumpe einer Einspritzdüse zugeführt. Eine Rückleitung führt von der Einspritzdüse zurück in den Zusatztank, wobei in der Rückleitung ein druckgesteuertes Rückschlagventil vorgesehen ist. Im Wechselspiel zwischen einzelnen Pumpvorgängen der Dosierpumpe und einem Freischalten des Rückschlagventils in der Rückleitung wird in der Einspritzdüse ein ausreichend hoher Druck aufgebaut, um eine ausreichend hohe Zerstäubung der wässrigen Harnstofflösung zu erzielen. Nachteilig bei diesem System ist der zusätzliche Aufwand in Form der Rückleitung zwischen Einspritzdüse und Zusatztank, als auch der regelungstechnische Aufwand, um das Wechselspiel zwischen Dosierpumpe und Rückschlagventil zu steuern.

Weitere Abgasreinigungssysteme zur Nachbehandlung eines Abgases sind aus der DE 10 2004 062 014 A1 und der DE 42 30 056 A1 bekannt. Jedoch sind insbesondere bei einem SCR-Verfahren zumeist Förderpumpen in Form von elektrisch angetriebenen Pumpen vorgesehen, wegen der Aggressivität der dabei verwendeten Harnstoff-Wasser-Lösung.

Entsprechend liegt der Erfindung die Aufgabe zugrunde, ein System zur Nachbehandlung eines Abgases eines Verbrennungsmotors mit einem Reduktionsmittel zu schaffen, das einen robusten und einfachen Aufbau mit möglichst wenig Komponenten aufweist.

Die Aufgabe wird durch ein System mit den Merkmalen von Anspruch 1 gelöst. Vorteilhafte Weiterbildungen sind in den abhängigen Ansprüchen definiert.

Ein erfindungsgemäßes System zur Nachbehandlung eines Abgases eines Verbrennungsmotors mit einem Reduktionsmittel umfasst einen das Reduktionsmittel enthaltenden Tank, einen von dem Abgas durchströmten Katalysator, der an ein Abgasrohr angeschlossen ist, eine Düse, die stromaufwärts des Katalysators in das Abgasrohr mündet, wobei der Tank für das Reduktionsmittel über eine Leitung mit der Düse verbunden ist, und eine in der Leitung angeordnete Dosierpumpe, die das Reduktionsmittel von dem Tank unter Druck zur Düse fördert, um das Reduktionsmittel mittels der Düse in das Abgasrohr einzuspritzen, wobei die Dosierpumpe eine hydraulisch angetriebene Membranpumpe ist, die einen in Richtung der Membran längsverschieblichen Kolben aufweist, der die Membran mit Hydraulikflüssigkeit beaufschlagt, wobei die Membranpumpe einen Hubmagneten mit einem von einer Magnetspule eingeschlossenen Ankerkolben umfasst, durch den der Kolben zumindest in Richtung der Membran antreibbar ist.

Ein Vorteil des erfindungsgemäßen Systems liegt darin, dass zwischen dem Zusatztank für das Reduktionsmittel und der Einspritzdüse lediglich eine einzige Verbindungsleitung erforderlich ist. Die hydraulisch angetriebene Membranpumpe fördert das Reduktionsmittel mit einem solch ausreichend hohen Druck zur Einspritzdüse, dass eine Rückleitung von der Einspritzdüse in den Zusatztank für das Reduktionsmittel, in welcher Rückleitung ein Rückschlagventil angeordnet ist, entfallen kann. Neben dem genannten ausreichend hohen Druck dosiert die Membranpumpe das Reduktionsmittel zugleich in exakt den Mengen, die für einen korrekten Ablauf der Reduktion in dem Katalysator notwendig ist. Der Antrieb des Kolbens, der die Membran mit Hydraulikflüssigkeit beaufschlagt, durch den magnetisch betätigten Ankerkolben gewährleistet eine Förderung des Reduktionsmittels mit hoher Präzision, ohne dass dabei der Ankerkolben einem signifikanten Verschleiss ausgesetzt ist.

In vorteilhafter Weiterbildung der Erfindung kann wie erläutert die Einspritzdüse nur über die eine Verbindungsleitung mit dem Zusatztank für das Reduktionsmittel verbunden sein. Dies vereinfacht den Leitungsaufbau des erfindungsgemäßen Systems. Allein durch die Membranpumpe kann ein ausreichend hoher Druck erzeugt werden, der für das Einspritzen des Reduktionsmittels in das Abgasrohr erforderlich ist. Die Membranpumpe ist so beschaffen, dass sie einen Druck > 2 bar, insbesondere > 5 bar und insbesondere > 10 bar erzeugen kann.

In vorteilhafter Weiterbildung der Erfindung kann das Reduktionsmittel eine Harnstofflösung oder eine Harnstoff-Wasser-Lösung sein. Die hydraulisch angetriebene Membranpumpe ist zum Dosieren eines solch aggressiven Mediums geeignet, da in Folge der Membran eine Trennung zwischen dem Antriebs- bzw. Druckraum und dem Förderraum für das Reduktionsmittel vorliegt. Somit kommt die aggressive Harnstoff-Wasser-Lösung nicht in Kontakt mit den bewegten Antriebselementen der Membranpumpe.

In vorteilhafter Weiterbildung der Erfindung kann die Membranpumpe an eine Motorsteuerungseinrichtung angeschlossen sein, die die Membranpumpe in Abhängigkeit eines Betriebszustands eines Verbrennungsmotors antreibt. Entsprechend kann die Oszillationsfrequenz eines Förder- bzw. Antriebskolbens, der ein Fluid in Richtung der Membran zu dessen Verformung verdrängt, an den Betriebszustand des Verbrennungsmotors angepasst sein. Bei höheren Drehzahlen des Motors bzw. bei größerer Last wird entsprechend auch die Oszillationsgeschwindigkeit des Förderkolbens der Membranpumpe erhöht, um eine größere Menge an Reduktionsmittel in den Abgasstrom einzuspritzen.

In vorteilhafter Weiterbildung der Erfindung kann der Katalysator ein SCR-Katalysator sein. Vorzugsweise dient also das System zur Abgas-Nachbehandlung bei Dieselkraftfahrzeugen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand mehrerer Ausführungsformen in der Zeichnung schematisch dargestellt und wird unter Bezugnahme auf die Zeichnung ausführlich beschrieben.

Es zeigen:
- Figur 1: eine Querschnittsansicht einer erfindungsgemäßen Membranpumpe in einem vollständig montierten Zustand,
- Figur 2: eine Querschnittsansicht einer weiteren Ausführungsform der erfindungsgemäßen Membranpumpe in einem vollständig montierten Zustand,
- Figur 3: den Bereich B von Figur 1 in einer vergrößerten Ansicht,
- Figur 4: eine Querschnittsansicht eines Förderkolbens,
- Figur 5: den Bereich A von Figur 4 in einer vergrößerten Ansicht,
- Figur 6: eine Querschnittsansicht einer weiteren Ausführungsform der erfindungsgemäßen Membranpumpe mit einem Ausgleichsvolumen,
- Figur 7: eine Querschnittsansicht einer weiteren Ausführungsform der erfindungsgemäßen Membranpumpe, mit einem Ausgleichsvolumen,
- Figur 8: eine Querschnittsansicht eines erfindungsgemäßen Pumpenkopfes für eine Membranpumpe,
- Figur 9: eine Querschnittsansicht einer weiteren Ausführungsform des erfindungsgemäßen Pumpenkopfes,
- Figur 10: eine Querschnittsansicht einer weiteren Ausführungsform des erfindungsgemäßen Pumpenkopfes, mit daran montierten Anschlußleitungen,
- Figur 11: eine Querschnittsansicht eines Pumpenkopfes, der mit einer erfindungsgemäßen Membran zusammenwirkt,
- Figur 12: eine Querschnittsansicht der erfindungsgemäßen Membran von Figur 11,
- Figur 13: eine Teilquerschnittsansicht eines erfindungsgemäßen Rückschlagventils,
- Figur 14: eine Draufsicht auf Figur 13,
- Figur 15a: eine Querschnittsansicht eines Teils eines Pumpenkopfes, mit darin montierten erfindungsgemäßen Rückschlagventilen gemäß Fig. 13,
- Figur 15b: eine Draufsicht aus Richtung des Pfeils C von Figur 15a,
- Figur 16: eine Querschnittsansicht eines erfindungsgemäßen Rückschlagventils,
- Figur 17: eine Draufsicht auf eine erfindungsgemäße Federmembran, die bei dem Rückschlagventil von Figur 16 verwendet wird,
- Figur 18: eine Querschnittsansicht einer weiteren Ausführungsform einer erfindungsgemäßen Federmembran, zur Verwendung bei einem Rückschlagventil,
- Figur 19: eine Draufsicht auf die Federmembran von Figur 18,
- Figur 20: eine Querschnittsansicht einer weiteren Ausführungsform eines erfindungsgemäßen Rückschlagventils, mit der Federmembran von Figur 18 bzw. 19,
- Figur 21: eine Schnittansicht entlang der Linie I-I von Figur 20, und
- Figur 22: eine prinzipiell vereinfachte Ansicht eines erfindungsgemäßen Abgasnachbehandlungssystems, bei dem in einer Leitung von einem Reduktionsmittel-Tank zu einer vor einem Katalysator angeordneten Einspritzdüse eine Membranpumpe gemäß Figur 1 oder 2 angeordnet ist.

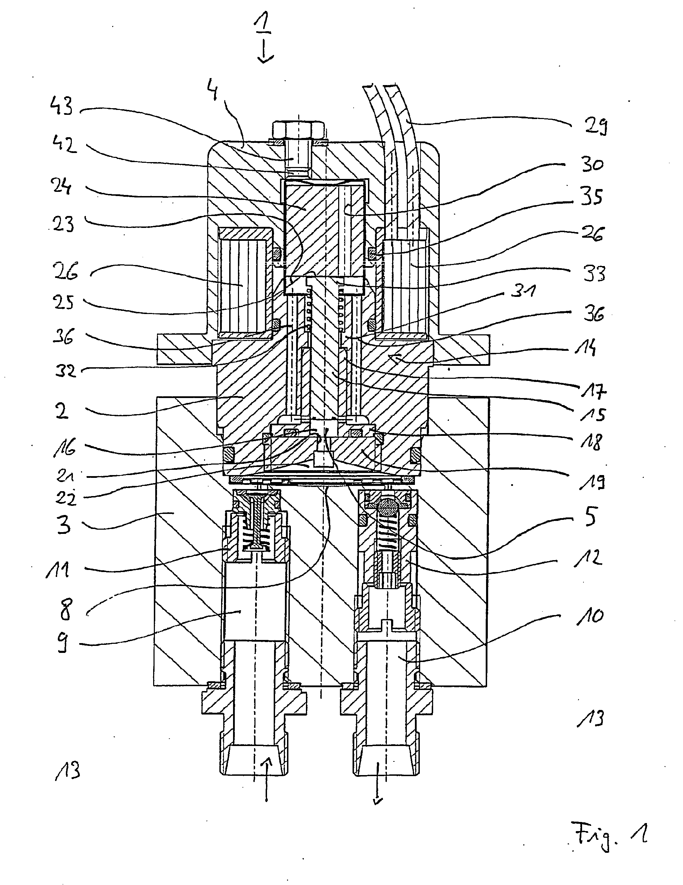

Die Membranpumpe 1 dient zum Fördern eines Fluids, insbesondere eines flüssigen Mediums. Ohne dies als Einschränkung zu verstehen, wird das zu fördernde Fluid nachstehend nur als flüssiges Medium bezeichnet. Der Ansaugkanal 9 ist über eine an dem Kupplungsstutzen 13 angeschlossenen Leitung mit einem (nicht gezeigten) Tank verbunden, der das flüssige Medium enthält. Der Ausstoßkanal 10 ist über eine an dem entsprechenden Kupplungsstutzen 13 angeschlossene Leitung mit einer Düse oder dergleichen verbunden, an den das flüssige Medium zu dosieren ist. Die Membranpumpe 1 basiert auf dem Prinzip, dass in dem Förderraum 8 mittels der Membran 7 abwechselnd ein Saugdruck bzw. ein Überdruck erzeugt wird. Bei einem Saugdruck wird das flüssige Medium wie durch einen Pfeil in Figur 1 angedeutet durch den Kupplungsstutzen hindurch über den Ansaugkanal 9 in den Förderraum 8 hinein gesaugt, wobei in Folge des Ansaugdrucks das erste Rückschlagventil 11 öffnet und das zweite Rückschlagventil 12 schließt. Durch das Ansaugen wird der Förderraum 8 im wesentlichen vollständig mit dem flüssigen Medium gefüllt. Bei einer Druckumkehr in dem Förderraum 8, d.h. bei einem Überdruck, der durch eine Verformung der Membran 7 in Richtung des Pumpenkopfes 3 entsteht, wird das flüssige Medium aus dem Förderraum 8 durch den Ausstoßkanal 10 ausgestoßen, wobei in Folge des Überdrucks das zweite Rückschlagventil 12 in dem Ausstoßkanal 10 öffnet und das erste Rückschlagventil 11 in dem Ansaugkanal 9 schließt. Durch fortwährendes Ausbilden eines Unter- und Überdrucks in dem Förderraum 8 wird das flüssige Medium mittels der Membranpumpe 1 dosiert.

Die Membranpumpe 1 verfügt über einen hydraulischen Membranantrieb, mit dem die Membran 7 von der Seite des Druckraums 5 her mit einem Hydraulikvolumen beaufschlagt wird. Die Membran 7 ist also nicht direkt mittels eines mechanischen Elements angetrieben, das an der Membran 7 befestigt ist, sondern erfährt eine erzwungene Verformung durch die Hydraulikflüssigkeit 6, die in dem Druckraum 5 enthalten ist. Im Einzelnen umfasst der hydraulische Membranantrieb 14 einen längsverschieblichen Kolben in Form eines Förderkolbens 15. In dem Pumpenkörper 2 ist ein Kolbenarbeitsraum 16 ausgebildet, der Teil des Druckraums 5 ist. In einer mittig in dem Pumpenkörper 2 ausgebildeten Bohrung ist eine Führungshülse 17 eingefasst, innerhalb der der Förderkolben 15 längsverschieblich geführt ist. Soweit die Führungshülse 17 nicht durch den Förderkolben 15 ausgefüllt ist, ist sie mit der Hydraulikflüssigkeit 6 gefüllt und bildet damit ebenfalls einen Teil des Druckraums 5. Angrenzend an einen Fußabschnitt 18 der Führungshülse 17 ist in dem Pumpenkörper 2 ein Anschlagsblock 19 eingefasst. Mit seiner der Führungshülse 17 zugewandten Oberfläche bildet der Anschlagsblock 19 eine Bodenfläche 20 für den Kolbenarbeitsraum. In einem mittigen Bereich des Anschlagsblocks und koaxial zur Längsachse des Förderkolbens 15 ist eine Durchgangsöffnung 21 ausgebildet, die den Anschlagsblock koaxial zur Längsachse des Förderkolbens 15 der Länge nach durchsetzt. Entsprechend mündet diese Durchgangsöffnung 21 zur Membran 7 hin, wobei unterhalb des Anschlagsblocks 19 ein Membranarbeitsraum 22 ausgebildet ist. Auch der Membranarbeitsraum 22 ist Teil des Druckraums 5 und somit mit der Hydraulikflüssigkeit 6 gefüllt.

In dem Pumpenkörper 2 und in dem oberen Gehäuseteil 4 sind aneinander angepasste Ausnehmungen ausgebildet, die bei montiertem oberen Gehäuseteil 4 einen Antriebsraum 23 ausbilden. Innerhalb des Antriebsraums 23 ist ein Antriebskolben 24 in Form eines Ankerkolbens verschieblich aufgenommen. Der Förderkolben 15 durchsetzt oberhalb der Führungshülse 17 den Pumpenkörper 2 mit einem Spiel, wobei seine obere Stirnseite 25 in den Antriebsraum 23 hineinragt. Der Antriebsraum 23 ist so ausgebildet, dass der darin verschiebliche Antriebskolben 24 mit einer Längsachse koaxial zur Längsachse des Förderkolbens 15 ausgerichtet ist. Da der Antriebsraum 23 ebenfalls Teil des Druckraums ist, ist er mit der Hydraulikflüssigkeit 6 gefüllt. Anders ausgedrückt, wird der Antriebskolben 24 von der Hydraulikflüssigkeit 6 umspült, so dass er bei seiner Längsverschiebung in dem Antriebsraum 23 von der Hydraulikflüssigkeit 6 geschmiert ist. Gleiches gilt für den Förderkolben 15, der bei einer Verschiebung in der Führungshülse ebenfalls durch die Hydraulikflüssigkeit geschmiert ist.

Der Ankerkolben 24 wird durch ein Erzeugen eines magnetischen Felds zwangsweise innerhalb des Antriebsraums 23 bewegt. Hierzu ist zwischen dem oberen Gehäuseteil 4 und dem Pumpenkörper 2 zumindest eine Magnetspule 26 befestigt, die zumindest einen Teil des Ankerkolbens 24 umschließt. Zwischen einer innen liegenden Stirnseite 27 des oberen Gehäuseteils 4 und einem daran angrenzenden Teil des Pumpenkörpers 2 ist eine Ausnehmung 28 vorgesehen, die innerhalb des Antriebsraums 23 eine seitliche umlaufende Öffnung bildet. Somit wird ein magnetisches Feld, das beim Bestromen der Magnetspule 26 erzeugt wird, nicht durch einen zumeist metallischen Werkstoff des Pumpenkörpers 2 und/oder des oberen Gehäuseteils 4 abgeschirmt und kann auf den Ankerkolben 24 wirken. In Folge dessen wird der Ankerkolben 24 bei einem Bestromen der Magnetspule 26 innerhalb des Antriebsraums 23 nach unten, d.h. in Richtung des Förderkolbens 15, zwangsweise verschoben. Die Magnetspule 26 ist an elektrische Leitungen 29 angeschlossen, die nach oben, d.h. entgegen gesetzt zur Membran 7, aus dem oberen Gehäuseteil 4 herausgeführt sind.

Um einen Druckausgleich für die in dem Antriebsraum 23 enthaltene Hydraulikflüssigkeit 6 zu schaffen, weist der Ankerkolben 24 eine Durchgangsöffnung 30 auf, die im wesentlichen parallel zur Längsachse des Ankerkolbens 24 ist und in beiden Stirnseiten des Ankerkolbens 24 mündet. Somit kann die Hydraulikflüssigkeit 6 bei einer Verschiebung des Ankerkolbens 24 durch die Durchgangsöffnung 30 hindurchtreten, was zu einem Druckausgleich auf beiden Stirnseiten des Ankerkolbens 24 führt und somit eine Verschiebung nicht behindert.

Die Bohrung, in der innerhalb des Pumpenkörpers 2 die Führungshülse 17 eingefasst ist, weist oberhalb der Führungshülse 17 einen Schulterabschnitt 31 auf, der die Bohrung verengt. Der Förderkolben 15 erstreckt sich mit seinem Schaft durch den Schulterabschnitt 31 hindurch. Entgegengesetzt zur Führungshülse 17 sitzt auf dem Schulterabschnitt 31 eine Spiralfeder 32 auf, die den Schaft des Förderkolbens 15 umschließt. Ein Kopfabschnitt 33 der oberen Stirnseite 25 des Förderkolbens 15 weist einen größeren Durchmesser als der Schaft des Förderkolbens 15 auf. Entsprechend greift die Spiralfeder 32 an den Kopfabschnitt 33 an, wodurch der Förderkolben 15 in seiner Längsachse in den Antriebsraum 23 hinein gedrückt wird. Anders ausgedrückt, ist der Förderkolben 15 durch die Spiralfeder 32 in einer Richtung weg von der Membran 7 bzw. dem Kolbenarbeitsraum 16 vorgespannt.

Mit einer unteren Stirnseite 34 wirkt der Förderkolben 15 mit dem Kolbenarbeitsraum 16 zusammen. Dies bedeutet, dass der Förderkolben 15 mit seiner unteren Stirnseite 34 in den Kolbenarbeitsraum 16 bzw. der Führungshülse 17 verschieblich geführt ist, wobei die untere Stirnseite 34 in Kontakt mit der Hydraulikflüssigkeit steht und diese bei einer Verschiebung des Förderkolbens 15 verdrängt. Hierzu ist es wichtig, dass der Förderkolben am Rand der unteren Stirnseite mit einer exakten Passung auf den Innendurchmesser der Führungshülse 17 abgestimmt ist, so dass ein leckagefreies Verdrängen der Hydraulikflüssigkeit erzielt wird.

Der Betrieb des hydraulischen Membranantriebs 14 funktioniert nun wie folgt:

In einem Ausgangszustand befindet sich der Ankerkolben 24 in einem oberen Bereich des Antriebsraums 23, in welche Stellung er durch die obere Stirnseite 25 des Förderkolbens 15 gedrückt wird, in Folge der Vorspannung der Spiralfeder 32. Bei einem Bestromen der Magnetspule 26 wird der Ankerkolben 24 in Folge des erzeugten Magnetfeldes nach unten, d.h. gegen die obere Stirnseite 25 des Förderkolbens 15 bewegt. Da die Feldstärke des Magnetfeldes ausreichend stark ist, kann die Verschiebung des Ankerkolbens 24 gegen die Vorspannung der Spiralfeder 32 erfolgen. Indem der Ankerkolben 24 den Förderkolben 15 in Richtung des Kolbenarbeitsraums antreibt, verdrängt die untere Stirnseite 34 des Förderkolbens die Hydraulikflüssigkeit 6 innerhalb des Druckraums 5 bzw. des Kolbenarbeitsraums 16. In Folge dessen wird ein definiertes Volumen der Hydraulikflüssigkeit 6 durch die Durchgangsöffnung 21 des Anschlagsblocks 19 hindurch in den Membranarbeitsraum 22 verdrängt, so dass die Membran 7 in den Förderraum 8 zwangsverformt wird. Das in dem Förderraum 8 enthaltene flüssige Medium bzw. darin enthaltene Restluft wird durch den entstehenden Überdruck aus dem Förderraum 8 durch den Ausstoßkanal 10 heraus gestoßen. Wenn die Magnetspule 26 entregt wird, drückt die Spiralfeder 32 den Kopfabschnitt 33 in den Antriebsraum 23 hinein. Gleichzeitig wird durch den Kontakt mit der oberen Stirnseite 25 der Ankerkolben 24 in Figur 1 nach oben in den Antriebsraum 23 zurückgedrückt. Wie vorstehend erläutert, stellt die in dem Ankerkolben ausgebildete Durchgangsöffnung 30 einen Druckausgleich in dem Antriebsraum 23 sicher, wenn der Ankerkolben 24 darin hin- und herbewegt wird.

Mittels einer geeigneten Ansteuerung der Magnetspule 26 lassen sich ein Hub und eine Frequenz der Bewegung des Ankerkolbens 24 stufenlos einstellen. Dies wird sich linear über die Kopplung des Ankerkolbens 24 mit dem Förderkolben 15 auf das Volumen an Hydraulikflüssigkeit 6 aus, mit dem die Membran 7 verformt wird. Im Ergebnis lassen sich also eine Fördermenge und ein Förderdruck für das zu dosierende flüssige Medium exakt einstellen.

Der Ankerkolben 24 und der Förderkolben 15 stehen bei Ihrer translatorischen Bewegung zwar in beiden Richtungen miteinander in Kontakt, sind jedoch nicht fest miteinander verbunden. Bei einem Bestromen der Magnetspule 26 beaufschlagt der Ankerkolben 24 den Förderkolben 15 und drückt diesen in Richtung des Kolbenarbeitsraums 16. Ein wichtiges Merkmal bei diesem Antrieb ist, dass der Antriebskolben 24 in einer Richtung weg von dem Kolbenarbeitsraum von dem Förderkolben 15 entkoppelt ist. Lediglich durch die Vorspannung der Spiralfeder 32 bleiben die beiden Kolben in Anlagekontakt miteinander, wenn die Magnetspule 26 entregt wird. Dies hat den Vorteil, dass Querkräfte, denen der Ankerkolben 24 quer zu seiner Längs- bzw. Verlagerungsrichtung in Folge des Magnetfeldes ausgesetzt werden sein, nicht auf den Förderkolben 15 übertragen werden. Demnach bleibt der Förderkolben 15 frei von solchen Querkräften, und wird ausschließlich in einer Richtung, im wesentlichen parallel zu seiner Längsachse, durch den Ankerkolben angetrieben. Hieraus resultiert ein geringerer Verschleiß für den Förderkolben und eine entsprechend hohe Lebensdauer. Daneben unterstützt dies eine exakte axiale Führung des Förderkolbens 15 innerhalb der Führungshülse 17.

Die verschiedenen Grundelemente der Membranpumpe 1, d.h. der Pumpenkörper 2, der Pumpenkopf 3 und das obere Gehäuseteil 4, sind miteinander geeignet verbunden, zum Beispiel durch Schraubgewinde, Verschraubungen, Paßmaße oder dergleichen. Eine ausreichende Dichtigkeit der Membranpumpe 1 wird durch geeignete Dichtungsmittel erzielt, wie etwa O-Ringe 35. Ein O-Ring 35 ist in einer Nut aufgenommen, die an dem Pumpenkörper 2 seitlich umlaufend und angrenzend an dem Pumpenkopf 3 ausgebildet ist. Des weiteren sind O-Ringe 35 in dem Pumpenkörper 2 und dem oberen Gehäuseteil 4 angrenzend an eine Wandung der Magnetspule 26 vorgesehen, um ein Austreten der Hydraulikflüssigkeit aus dem Arbeitsraum 23 bzw. der seitlich umlaufenden Öffnung 28 angrenzend an die Spulen zu verhindern. Weitere O-Ringe sind zwischen dem Fußabschnitt 18 und dem Anschlagsblock 19, dem Anschlagsblock 19 und dem Pumpenkörper 2, und den ersten und zweiten Rückschlagventilen 11, 12 und den entsprechenden Ansaug- und Ausstoßkanälen 9, 10 vorgesehen.

Mit der Membranpumpe 1 wird eine Medientrennung zwischen dem Druckraum 5 und dem Förderraum 8 erzielt, die dazu führt, dass auf der Seite des Druckraums, also in Figur 1 oberhalb der Membran 7, nahezu beliebige Materialien für die Elemente der Membranpumpe 1 eingesetzt werden können. Solche Materialien müssen weder vom Grundwerkstoff noch von einer eventuellen Oberflächenbehandlung mit dem zu fördernden flüssigen Medium kompatibel sein. Somit können diese Materialien auf ihre magnetischen, mechanischen, fertigungstechnischen bzw. wirtschaftlichen Eigenschaften hin optimiert sein, ohne auf eine Materialverträglichkeit mit einem möglicherweise aggressiven flüssigen Medium Rücksicht zu nehmen. Dies trifft insbesondere dann zu, wenn das flüssige Medium eine wässrige Harnstoff-Lösung ist.

Die genannte Trennung zwischen Druck- und Förderraum ermöglicht auf Seiten des Förderraums, d.h. im Bereich des Pumpenkopfes, eine relativ freie Werkstoffauswahl, da hier von den Gehäuseteilen lediglich die Funktionen Medium leiten, Druck aushalten sowie Aufnehmen der Membran-, Ventil- und Anschlußteile von Bedeutung sind. Neben metallischen Bauteilen sind entsprechend auch preiswerte Kunststofflösungen realisierbar. Insbesondere ein möglicher hoher Integrationsgrad von Kunststoffteilen lassen eine nahezu beliebige Anordnung der Kupplungsstutzen 13 bzw. sonstiger hydraulischer Anschlüsse zu.

Die Darstellung von Figur 1 zeigt, dass die Membranpumpe 1 im wesentlichen rotationssymmetrisch ausgebildet ist. Hieraus resultiert vorteilhaft ein kompakter Bauraum, der die Membranpumpe 1 insbesondere in mobilen Anwendungen geeignet macht.

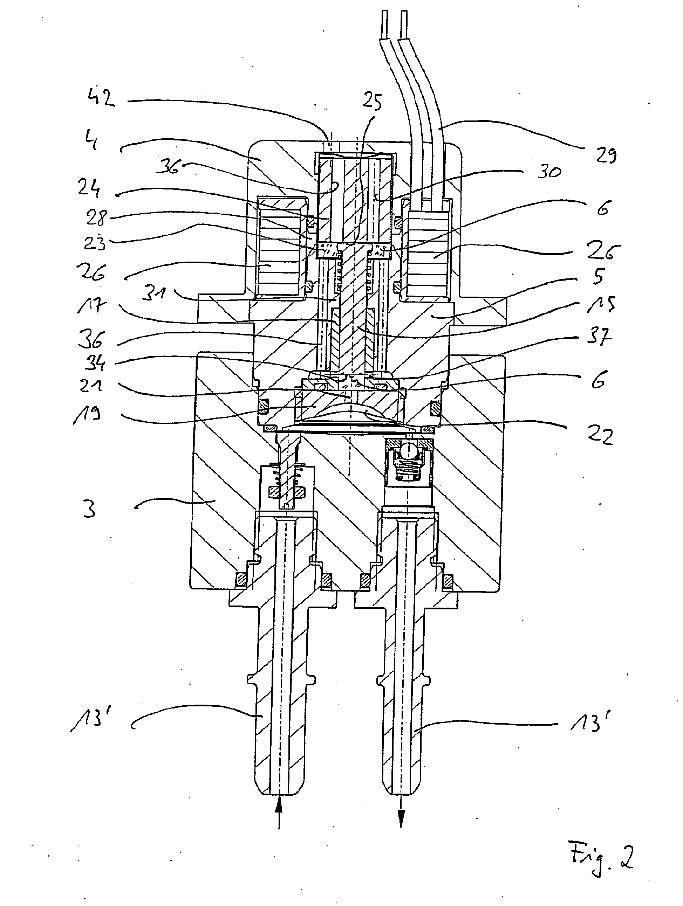

In Figur 2 ist eine Querschnittsansicht einer weiteren Ausführungsform der erfindungsgemäßen Membranpumpe 1 gezeigt. Diese Ausführungsform entspricht in weiten Teilen jener von Figur 1, wobei gleiche Bauteile mit gleichen Bezugszeichen benannt und zur Vermeidung von Wiederholungen nicht erneut erläutert sind.

Bei der in Figur 2 gezeigten Membranpumpe 1 ist eine der Membran 7 entgegen gesetzte Oberfläche des Membranarbeitsraums 22 nicht kegelförmig, sondern kalottenförmig ausgebildet. Im Zentrum der Kalotte mündet die Durchgangsöffnung 21, die einen Durchlass von dem Kolbenarbeitsraum oberhalb des Anschlagsblocks 19 bis hin zur Membran 7 ermöglicht. Wie vorstehend erläutert, ist der Membranarbeitsraum 22 unterhalb des Anschlagsblocks 19 ebenfalls Teil des Druckraums 5 bzw. des Kolbenarbeitsraums 16. Die Funktionsweise der Membran 7 innerhalb des Förderraums 8 ändert sich durch die kalottenförmige Ausbildung der Oberfläche des Membranarbeitsraums 22 nicht.

Ein weiterer Unterschied bei der Ausführungsform nach der Figur 2 sind die an einer Unterseite des Pumpenkopfes 3 befestigten Kupplungsstutzen 13', die wesentlich länger ausgeführt sind. Somit eignen sich die Kupplungsstutzen 13' für ein Anschließen von flexiblen Schläuchen oder dergleichen, die problemlos über eine jeweilige Außenumfangsfläche des Kupplungsstutzens 13' gezwungen werden.

In gleicher Weise wie bei der Ausführungsform nach Figur 1 sind bei der Ausführungsform nach Figur 2 innerhalb des Pumpenkörpers 2 Ausgleichsbohrungen 36 ausgebildet, die im wesentlichen vertikal und somit parallel zur Längsachse des Förderkolbens 15 verlaufen. Die Ausgleichsbohrungen 36 münden mit ihren oberen Enden jeweils in dem Antriebsraum 23.

Die Führungshülse 17, die mit ihrem Inneren einen Teil des Kolbenarbeitsraums 16 bildet, weist oberhalb des Fußabschnitts 18 seitlich zwei Steuerbohrungen 37 auf. Die Steuerbohrungen 37 münden mit ihrem einen Ende an der Innenumfangsfläche der Führungshülse 17, und mit ihrem anderen Ende in einer an die Führungshülse 17 angrenzenden Ausnehmung 38 des Pumpenkörpers 2. Die Ausgleichsbohrungen 36 münden jeweils in der Ausnehmung 38. Somit bilden die Ausgleichsbohrungen 36 eine Verbindungsleitung zwischen dem Antriebsraum 23 und der Ausnehmung 38. Entsprechend kann die Hydraulikflüssigkeit 6 von dem Antriebsraum 23 über die Ausgleichsbohrungen 36, die Ausnehmung 38 und die Steuerbohrungen 37 in den Kolbenarbeitsraum 16 gespeist werden, mit dem die untere Stirnseite 34 des Förderkolbens 15 zusammenwirkt.

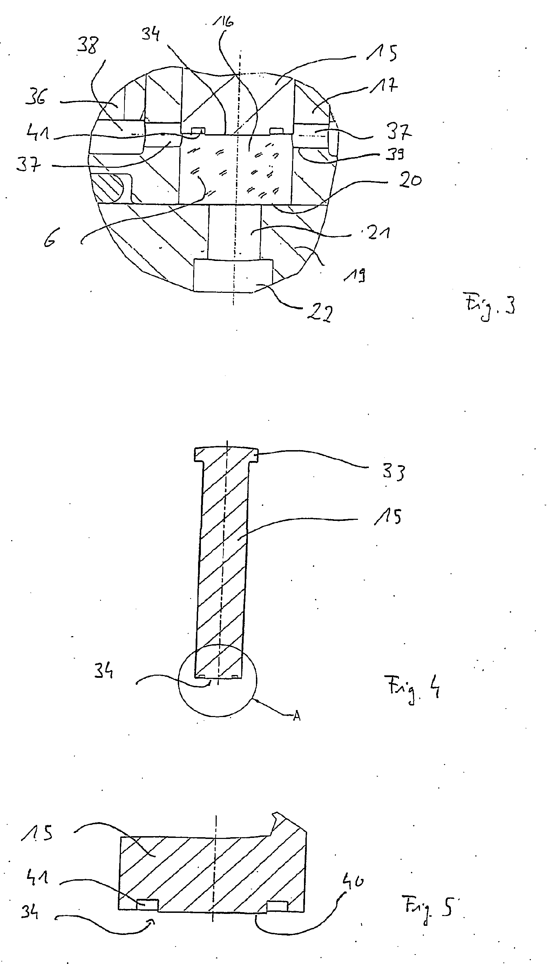

Zur Verdeutlichung der Verdrängung der Hydraulikflüssigkeit 6 in den Kolbenarbeitsraum 16 durch die untere Stirnseite 34 des Förderkolbens 15 bei dessen Verschiebung in Richtung der Membran ist der Bereich B von Figur 1 in Figur 3 vergrößert gezeigt. Es versteht sich, dass die Ausführungsform gemäß Figur 2 in Bezug auf den Bereich B von Figur 1 analog aufgebaut ist.

Der Förderkolben 15 ist innerhalb der Führungshülse 17 verschieblich geführt, wobei seine untere Stirnseite in Richtung des Kolbenarbeitsraums 16 weist und darin die Hydraulikflüssigkeit 6 verdrängt. In der Wandung der Führungshülse 17 sind die beiden Steuerbohrungen 37 ausgebildet, die eine Fluidverbindung zwischen dem Kolbenarbeitsraum unterhalb der unteren Stirnseite 34 und dem Teil der Ausnehmung 38 außerhalb der Führungshülse 17 schaffen. Der Förderkolben 15 überfährt bei seinem Verschieben innerhalb der Führungshülse 17 mit einem Umfangsrand der unteren Stirnseite 34 die beiden Steuerbohrungen 37. In der Darstellung von Figur 3 sind die Mündungen der Steuerbohrungen 37 an der Innenumfangsfläche der Führungshülse 17 nur teilweise von dem Förderkolben 15 verdeckt. Der gesamte Kolbenarbeitsraum 16, d.h. auch die Durchgangsöffnung 21, die sich in dem Anschlagsblock 19 in den Membranarbeitsraum 22 hinein erstreckt, ist mit der Hydraulikflüssigkeit 6 gefüllt.

Wenn der Förderkolben 15, ausgehend von der in Figur 3 gezeigten Stellung, weiter in Richtung der Membran verschoben wird, überfährt der Umfangsrand der unteren Stirnseite 34 vollständig die beiden Steuerbohrungen 37. Wenn der Umfangsrand der unteren Stirnseite 34 eine untere Kante 39 einer jeweiligen Steuerbohrung 37 überfährt, dann ist der verbleibende Kolbenarbeitsraum 16 unterhalb der unteren Stirnseite 34 von den Steuerbohrungen 37 getrennt. Dies hat zur Folge, dass dieser Teil des Kolbenarbeitsraums dann nicht mehr mit der außerhalb der Führungshülse 17 befindlichen Hydraulikflüssigkeit 6 gespeist wird. Nach dem genannten Überfahren der unteren Kante 39 durch den Umfangsrand der unteren Stirnseite 34 liegt also ein abgeschlossenes Volumen in dem Kolbenarbeitsraum 16 vor. Das Volumen der Hydraulikflüssigkeit 6, welches in Folge der Verschiebung nach unten durch die Durchgangsöffnung 21 hindurch in Richtung der Membran 7 verdrängt wird, bestimmt sich aus dem Produkt der Flächen der unteren Stirnseite 34 des Förderkolbens 15 mit der Strecke, um die sich der Förderkolben innerhalb des Kolbenarbeitsraums ab der unteren Kante 39 in Richtung der Membran 7, d.h. in Richtung der Bodenfläche 20, bewegt. Mit der Membranpumpe 1 lässt sich insbesondere ein kleines Volumen der Hyfraulikflüssigkeit exakt in Richtung der Membran 7 dosieren. Hieraus resultiert eine nur geringe Verformung der Membran 7 und entsprechend ein nur geringes Fördervolumen für das flüssige Medium pro Arbeitstakt, bei gleichwohl hohen Förderdrücken.

Die Strecke, um die sich der Förderkolben 15 mit seiner unteren Stirnseite 34 in Richtung der Membran 7 verschieben lässt, wird durch die Bodenfläche 20 beschränkt. An der unteren Stirnseite 34 ist eine Erhebung 40 ausgebildet, die bei der Verschiebung des Förderkolbens 15 in Figur 3 nach unten in Kontakt mit der Bodenfläche 20 gelangt. Falls die Erhebung 40 die Bodenfläche 20 berührt, ist dadurch ein unterer Totpunkt des Förderkolbens 15 definiert. Die Erhebung 40 ist nur in einem mittigen Bereich der unteren Stirnseite 34 ausgebildet und durch eine Nut 41 begrenzt. Ein Außenumfangsrand der unteren Stirnseite 34 springt radial außen von der Nut 41 nach innen zurück, so dass die Erhebung 40 in einer Ebene senkrecht zur Längsachse des Förderkolbens 15 über den Außenumfangsrand der unteren Stirnseite 34 hervorsteht. Hierdurch wird bewirkt, dass bei einem Kontakt der Erhebung 40 mit der Bodenfläche 20 der Außenumfangsrand der unteren Stirnseite 34 nicht in Kontakt mit der Bodenfläche gelangt. Entsprechend ist diese Außenumfangsfläche auch keinem Verschleiß unterworfen, wenn der Förderkolben 15 mit seiner unteren Stirnseite 34 oszillierend gegen die Bodenfläche 20 stößt. Da sich somit eine Kante des Umfangsrandes der unteren Stirnseite 34, die nach dem Überfahren der Steuerbohrung 37 den Kolbenarbeitsraum 16 von der Steuerbohrung 37 abtrennt, nicht abgenutzt wird, ist ein äußerst exaktes Volumen innerhalb des Kolbenarbeitsraums durch die Bewegung des Förderkolbens 15 möglich. Insbesondere bei kleinen verdrängten Volumina in dem Kolbenarbeitsraum, bzw. bei nur geringen Membranbewegungen für ein kleines, zu dosierendes Volumen des flüssigen Mediums ist dies von großer Bedeutung. Daneben stellt sich eine hohe Lebensdauer ein.

An dem Umfangsrand der unteren Stirnseite 34 des Förderkolbens, der mit einer Innenwandfläche der Führungshülse 17 zusammenwirkt, ist kein Dichtungsmittel in Form eines Kolbenrings oder dergleichen erforderlich. Der Kontakt des Umfangsrands mit der Innenwandfläche entspricht einer Metall-Metall-Paarung. Durch die hohe Viskosität der Hydraulikflüssigkeit ist durch ein geeignet kleines Spaltmaß zwischen dieser Metall-Metall-Paarung eine Leckageströmung verhindert und ein entsprechend genaues Verdrängen von Hydraulikflüssigkeit durch die untere Stirnseite 34 gewährleistet.

In Figur 4 ist der Förderkolben 15 in einer Seitenschnittansicht gezeigt. Der Bereich A von Figur 4 ist in Figur 5 nochmals vergrößert gezeigt. Die Erhebung 40 steht erkennbar von einem Umfangsrand der unteren Stirnseite 34 hervor, und ist davon durch die umlaufende kreisförmige Nut 41 getrennt. Bei einem Kontakt der unteren Stirnseite 34 mit der Bodenfläche 20 bleibt der Umfangsrand der unteren Stirnseite 34 von der Bodenfläche 20 beabstandet und ist deshalb keinem Verschleiß unterworfen.

Durch das Verschieben des Förderkolbens 15 innerhalb der Führungshülse 17 über die untere Kante der Steuerbohrungen 37 hinaus wird wie erläutert, ein definiertes Volumen der Hydraulikflüssigkeit in Richtung der Membran 7 verdrängt. Hierdurch entsteht in dem Hydraulikraum 5 ein Unterdruck, der im wesentlichen dem verdrängten Volumen der Hydraulikflüssigkeit entspricht. Aus diesem Grund ist es für ein Verschieben des Förderkolbens 15 mit möglichst geringem Strömungswiderstand wichtig, in dem Druckraum 5 einen Druckausgleich zu schaffen. Hierfür weist das obere Gehäuseteil 4 eine Belüftungsöffnung 42 (Figur 2) auf, die in die Umgebung oder einen geeigneten Druckausgleichsbehälter mündet. Durch die Belüftungsöffnung 42 kann der Druckraum 5 in Verbindung mit Umgebungsluft stehen, so dass in dem Druckraum 5 Atmosphärendruck herrscht. Beim Verschieben des Förderkolbens 15 zu seinem unteren Totpunkt gelangt ein Luftvolumen durch die Belüftungsöffnung 42 in den Druckraum 5 hinein, welches Luftvolumen dem Volumen an Hydraulikflüssigkeit entspricht, das der Förderkolben 15 ab der unteren Kante 39 der Steuerbohrung 37 in den Kolbenarbeitsraum 16 verdrängt. An einer oberen Stirnseite des Ankerkolbens 24 bildet sich somit kein Unterdruck, wodurch ein Betrieb des hydraulischen Membranantriebs 14 mit möglichst geringen Strömungswiderständen möglich ist.

Die Belüftungsöffnung 42 kann in Betrieb der Membranpumpe unverschlossen bleiben. Bei der Ausführungsform von Figur 1 ist die Belüftungsöffnung 42 durch eine Schraube 43 verschlossen. Die Schraube 43 ist von einer (nicht gezeigten) Durchgangsbohrung durchsetzt, die wiederum in die Umgebung oder einen Druckausgleichsbehälter mündet. Durch die Schraube 43 ist ein freier Durchmesser der Belüftungsöffnung 42 vorteilhaft minimiert, jedoch immer noch ausreichend groß, um den Druckausgleich mit Luft sicherzustellen. Durch die Schraube 43 ist ein Eindringen von Schmutzpartikeln oder dergleichen durch die Belüftungsöffnung 42 ausgeschlossen.

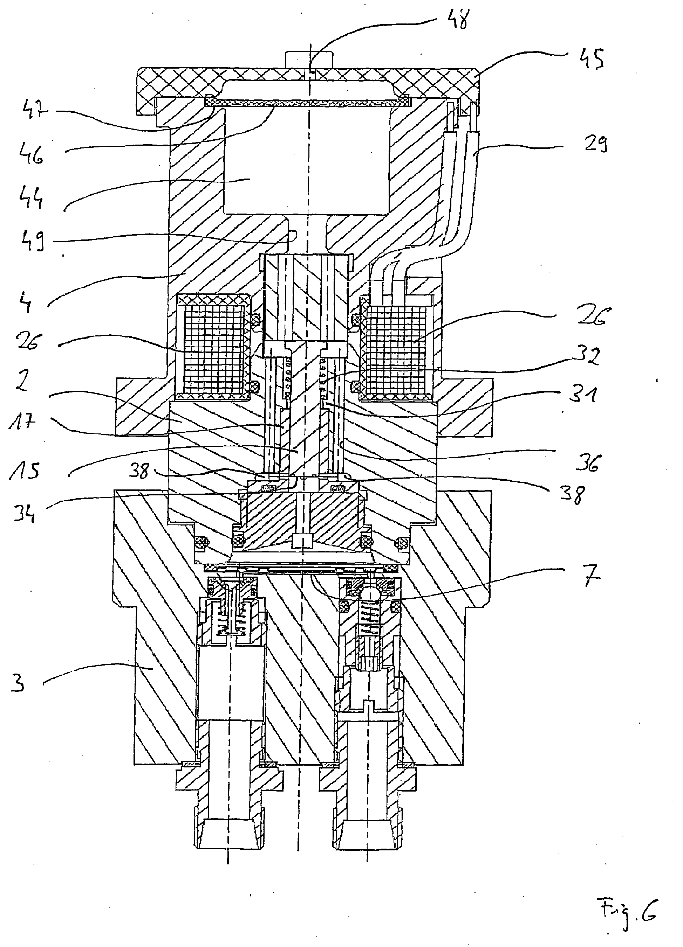

In der Figur 6 ist in einer Querschnittsansicht eine weitere Ausführungsform der erfindungsgemäßen Membranpumpe 1 gezeigt, die sich für einen Lage unabhängigen Betrieb eignet. Die Ausführungsformen gemäß Figur 1 und 2 sind im wesentlichen in der dargestellten Position zu betreiben, um ein Auslaufen der Hydraulikflüssigkeit 6 aus der Belüftungsöffnung 42 zu verhindern. Dies erfolgt dadurch, dass die Belüftungsöffnung 42 den geodätisch höchsten Punkt der Membranpumpe 1 bildet. Demgegenüber ist der Druckraum der Membranpumpe 1 nach der Auswirkungsform von Figur 6 nach außen hin verschlossen. Deshalb läßt sich diese Membranpumpe 1 auch mit einem Druckausgleich in einer beliebigen Lageposition betreiben.

Nachstehend ist das Druckausgleichsprinzip der Membranpumpe 1 gemäß Figur 6 im Detail beschrieben. Die grundlegende Funktionsweise der Membranpumpe gemäß Figur 6 entspricht den zuvor erläuterten Ausführungsformen, wobei gleiche Bauteile mit gleichen Bezugszeichen benannt und zur Vermeidung von Wiederholungen nicht erneut erläutert sind.

Die Membranpumpe 1 gemäß Figur 6 weist oberhalb des Antriebsraums 23 eine Zusatzkammer 44 auf, die in dem oberen Gehäuseteil 4 ausgebildet ist. Die Zusatzkammer 44 ist nach oben hin offen. Ein Gehäusedeckel 45 ist von oben auf dem oberen Gehäuseteil 4 befestigt. An einem oberen Rand der Zusatzkammer 45 ist eine Zusatzmembran 46 vorgesehen, die in eine Umfangsnut 47 des oberen Gehäuseteils 4 eingelegt und durch den aufgebrachten Gehäusedeckel 45 festgeklemmt ist. Somit ist die Zusatzkammer 44 nach oben durch die Zusatzmembran 46 verschlossen. Die Zusatzmembran 46 besteht aus einem elastischen Gummi oder aus einem elastisch verformbaren dünnen Blech, und kann sich geringfügig in die Zusatzkammer 44 hinein oder weg davon elastisch verformen.

Der Gehäusedeckel 46 weist eine Belüftungsöffnung 48 auf, die in die Umgebung oder einen Druckausgleichsbehälter führt. Der Bereich zwischen einer Oberseite der Zusatzmembran 46 und einer Innenfläche des Gehäusedeckels 45 ist zum Beispiel mit Luft unter Atmosphärendruck gefüllt. Damit ist der Druck oberhalb der Zusatzmembran 46, d.h. auf ihrer Seite entgegengesetzt zum Druckraum 5 konstant.

In dem oberen Gehäuseteil 4 ist unterhalb der Zusatzkammer 44 eine Bohrung 49 ausgebildet, die in die Zusatzkammer 44 mündet und an ihrer entgegengesetzten Seite in den Antriebsraum 23 führt, in dem der Ankerkolben 24 verschieblich aufgenommen ist. Die Bohrung 49 hat einen kleineren Durchmesser als die Zusatzkammer 44 bzw. der Antriebsraum 23. Die Bohrung 49 ist jedoch ausreichend dimensioniert, dass sie eine Fluidverbindung zwischen der Zusatzkammer 44 und dem Antriebsraum 23 schafft. Da der Durchmesser der Bohrung 49 kleiner ist als jener des Antriebsraum 23, sind an der oberen Stirnwand des Antriebsraums Anschlagsschultern 31 ausgebildet, die einen oberen Totpunkt für den Ankerkolben 24 definieren. Die Zusatzkammer 44 ist ebenfalls Teil des Druckraums 5 und mit der Hydraulikflüssigkeit 6 gefüllt.

Der Druckausgleich bei der Membranpumpe 1 gemäß Figur 6 funktioniert nun wie folgt:

Wenn der Ankerkolben 23 den Förderkolben 15 ausgehend von der in Figur 6 gezeigten Position in Richtung der Membran 7 antreibt, wird nach dem Überfahren der unteren Kante 39 der Steuerbohrung 37 durch die untere Stirnseite 34 des Förderkolbens 15 ein definiertes Volumen von Hydraulikflüssigkeit in Richtung der Membran 7 verdrängt. Hierdurch entsteht wie vorstehend erläutert ein Unterdruck in dem Druckraum 5. Dieser Unterdruck kann sich durch die Ausgleichsbohrungen 36, den Antriebsraum 23 und die Durchgangsöffnungen 30 in dem Ankerkolben 23 und die Bohrung 49 hindurch in die Zusatzkammer 44 auswirken. Dieser Unterdruck bewirkt, dass sich die Zusatzmembran 46 in die Zusatzkammer 44 hinein verformt. Anders ausgedrückt, bewirkt die Verformung der Zusatzmembran 46 in der Zusatzkammer 44 die Erzeugung eines Ausgleichsvolumens. Das durch die Verformung der Zusatzmembran 46 gebildete Ausgleichsvolumen entspricht dabei dem Volumen, das der Förderkolben 15 bei seiner Verschiebung innerhalb des Druckraums 5, bzw. innerhalb des Kolbenarbeitsraums 16 verdrängt.

Wenn in dem Druckraum 5 ein Überdruck infolge der Bewegung des Förderkolbens 15 in einer Richtung weg von der Membran 7 bzw. heraus aus dem Kolbenarbeitsraum 16 entsteht, erfolgt ein Ausgleich dieses Überdrucks durch die Zusatzmembran 46 nach dem gleichen Prinzip. Bei einem Überdruck in dem Druckraum 5, der sich bis in die Zusatzkammer 44 hinein auswirkt, wird die Zusatzmembran 46 in Richtung des Gehäusedeckels 45, also nach außen verformt. Eine solche Verformung der Zusatzmembran 46 schafft ein Ausgleichsvolumen, das dem Volumen entspricht, welches von dem Förderkolben 15 bzw. dem Ankerkolben 23 bei einem Saughub der Membranpumpe 1 verdrängt wird.

Die Zusatzmembran 46 verschließt die nach oben hin offene Zusatzkammer 44. Dadurch ist verhindert, dass die Hydraulikflüssigkeit 6 aus der Zusatzkammer 44 austreten kann. Dies gilt selbst dann, wenn die Membranpumpe 1 kopfüber betrieben wird. Ein Auslaufen der Hydraulikflüssigkeit 6 ist in jedem Fall verhindert. Da der Druckraum 5 durch die Zusatzmembran 46 in sich abgeschlossen ist, funktioniert der vorstehend erläuterte Druckausgleich infolge der Verformung der Zusatzmembran 46 in jeder beliebigen Betriebsposition der Membranpumpe 1. Hieraus resultiert eine Lageunabhängigkeit für den Betrieb der Membranpumpe 1 bzw. ihren Einbau in einem Fahrzeug.

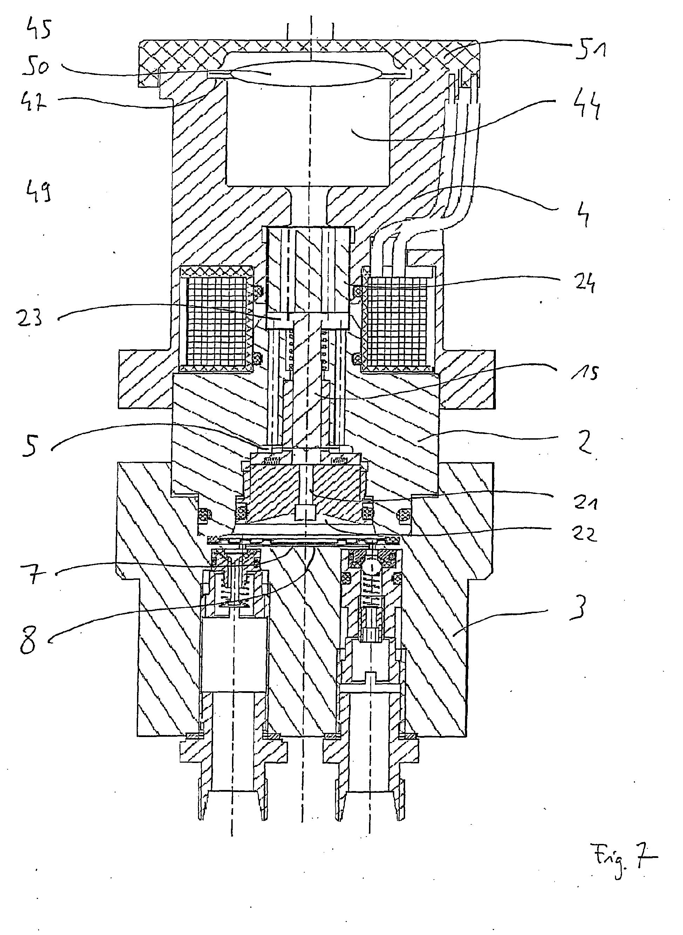

In Figur 7 ist eine weitere Ausführungsform der Membranpumpe 1 gezeigt, bei der in dem Druckraum 5 ein Ausgleichsvolumen erzeugt werden kann und damit ein Lage unabhängiger Betrieb möglich ist.

Im Unterschied zur Ausführungsform von Figur 6 ist bei der Ausführungsform gemäß Figur 7 anstelle der Zusatzmembran 46 eine Kapsel 50 vorgesehen, die an einem oberen Rand der Zusatzkammer 44 zwischen dem oberen Gehäuseteil 4 und dem Gehäusedeckel 45 befestigt ist. Die Kapsel 50 ist mit ihren Seitenrändern 51 in die Umfangsnut 47 eingelegt und durch den aufgebrachten Gehäusedeckel 45 darin festgeklemmt. Die Kapsel 50 bildet einen Hohlkörper mit elastisch verformbaren Wänden. Beispielsweise kann die Kapsel 50 aus einem dünnen Metallblech hergestellt sein, das diese elastischen Eigenschaften aufweist und gegen die Hydraulikflüssigkeit 6 resistent ist.

Die Zusatzkammer 44 ist durch den Gehäusedeckel 45 nach außen hin abgeschlossen. Dadurch ist ein ungewolltes Austreten der Hydraulikflüssigkeit 6, die in der Zusatzkammer 44 enthalten ist, in jedweder Position der Membranpumpe 1 nicht möglich. Die Kapsel 50 schließt also die Zusatzkammer 44 nicht nach außen hin ab, sondern ist durch die Fixierung ihrer Seitenränder 51 in der Umfangsnut 47 definiert innerhalb der Zusatzkammer 44 gehalten.

Der Druckausgleich mittels der Kapsel 50 funktioniert nun wie folgt:

Wenn in dem Druckraum 5 ein Unterdruck vorliegt, dehnt sich die Kapsel aus und vergrößert dabei ihr Volumen. Diese Volumenvergrößerung entspricht einem Ausgleichsvolumen und damit dem Volumen, das der Förderkolben 15 in Richtung der Membran 7 verdrängt. Bei einem Überdruck innerhalb der Druckkammer 5 funktioniert der Druckausgleich analog. Die Kapsel 50 wird zusammengedrückt und verkleinert dabei ihr Volumen. Die Volumenabnahme entspricht dabei dem Volumen, das bei einem Saughub durch den Förderkolben 15 zurück in den Druckraum 5 gefördert wird.

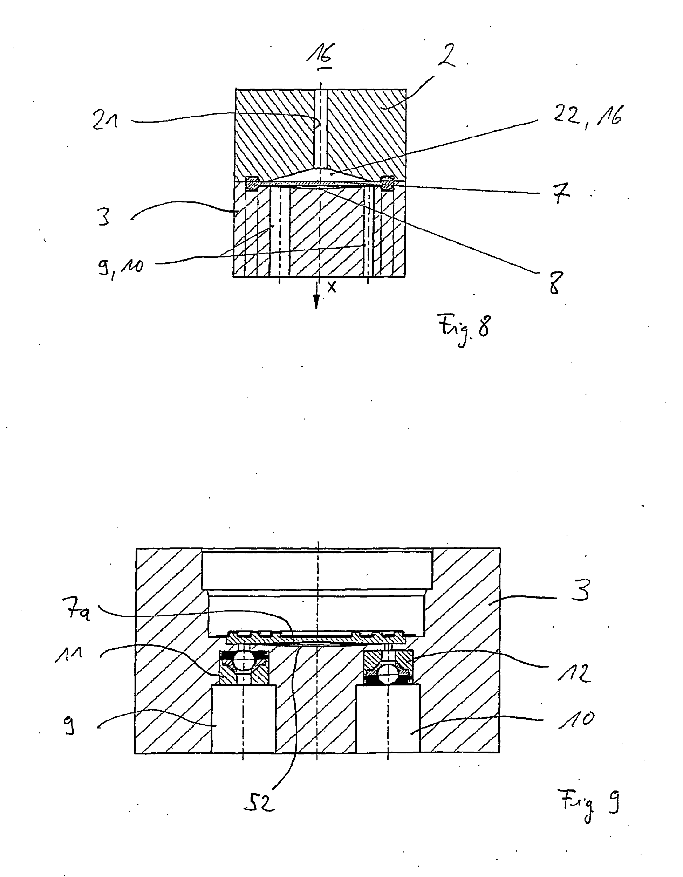

Bei einer Inbetriebnahme der Membranpumpe 1 befindet sich noch kein flüssiges Medium in dem Förderraum 8. Erst durch einen Saughub der Membran 7 wird das flüssige Medium durch den Ansaugkanal 9 in den Förderraum 8 angesaugt, und anschließend durch eine entgegengesetzte Bewegung der Membran 7 wieder aus dem Ausstoßkanal 10 ausgestoßen. Bei Membranpumpe wird dieser Vorgang Trockenansaugen genannt. Insbesondere bei geringen Volumina, mit denen das flüssige Medium zu fördern und zu dosieren ist, stellt sich das Trockenansaugen kritisch dar. In den Figuren 8 bis 12 sind verschiedene Ausführungsformen für den Pumpenkopf 3 bzw. die Membran 7 gezeigt, die das Trockenansaugen optimieren.

Figur 8 zeigt den Pumpenkörper 2 und den daran befestigten Pumpenkopf 3 in einer vereinfachten Querschnittsansicht. Die Membran 7 ist frei schwingend zwischen dem Pumpenkörper 2 und dem Pumpenkopf 3 befestigt und trennt den Druckraum 5 von dem Förderraum 8. Auf Seiten des Druckraums 5 befindet sich oberhalb der Membran 7 der Membranarbeitsraum 22, in dem die Durchgangsöffnung 21 mündet. In dem Pumpenkopf 3 sind der Ansaugkanal 9 und der Ausstoßkanal 10 ausgebildet, die in den Förderraum 8 unterhalb der Membran 7 münden.

An einer Oberfläche des Pumpenkopfes 3, die zur Membran 7 hin weist, ist eine Ausnehmung 52 in Form einer Kalotte ausgebildet, nämlich in dem Teil, der Oberfläche, der sich zwischen den Mündungen des Ansaugkanals 9 bzw. des Ausstoßkanals 10 befindet. Somit ist die Oberfläche des Pumpenkopfes 3 gegenüberliegend zur Membran 7 mit Ausnahme der Kalotte 52 im wesentlichen plan ausgebildet. In Verbindung mit einem solchen Pumpenkopf 3 kommt eine Membran 7 zum Einsatz, die in ihrem entspannten Zustand im wesentlichen plan verläuft.

Das Volumen, das die Kalotte 52 bezogen auf eine Ebene, die von den Planenaußenbereichen der Oberfläche des Pumpenkopfes 3 aufgespannt wird, einschließt, definiert ein Hub- bzw. Fördervolumen in dem Förderraum. Zu Beginn des Trockenansaugens wird die Hydraulikflüssigkeit 6 in den Membranarbeitsraum 22 hinein verdrängt, so dass die Membran 7 in Richtung des Pumpenkopfes 3 verformt wird und mit der Kalotte 52 in Kontakt gelangt. Hierbei wird eine Restluft aus dem Förderraum im wesentlichen vollständig durch den Ausstoßkanal 10 ausgestoßen, durch einen entsprechenden Überdruck in dem Förderraum. Bei einem anschließenden Saughub der Membranpumpe 1 wird die Membran 7 durch ein Abführen der Hydraulikflüssigkeit 6 aus dem Membranarbeitsraum 22 heraus nach oben verformt, wodurch in dem Förderraum 8 ein Unterdruck erzeugt wird. Durch diesen Unterdruck öffnet das erste Rückschlagventil 11 in dem Ansaugkanal 9, so dass das flüssige Medium in den Förderraum 8 hinein gesaugt wird. Beim anschließenden Fördertakt wird wiederum Hydraulikflüssigkeit 8 in den Membranarbeitsraum 22 verdrängt, was die Membran 7 in Richtung des Pumpenkopfes 3 verformt und in dem Förderraum 8 einen Überdruck erzeugt. Infolgedessen öffnet das zweite Rückschlagventil 12 in dem Ausstoßkanal 10, wodurch das flüssige Medium aus dem Förderraum 8 ausgestoßen wird.

Für ein problemloses Trockenansaugen ist von Bedeutung, dass zwischen der Membran und einer Oberfläche des Pumpenkopfes 3 ein exaktes Volumen definiert ist, das durch die Membran 7 bei Beginn des Trockenansaugens ausgefüllt werden kann. Des weiteren ist von Bedeutung, dass beim ersten Drucktakt, wenn sich die Membran 7 in die Kalotte 52 hinein verformt, möglichst wenig Restluft in dem Förderraum 8 verbleibt. Je weniger Restluft in dem Förderraum 8 beim ersten Drucktakt verbleibt, desto größer ist der Unterdruck beim anschließenden Saughub. Hierzu ist es wichtig, dass der Förderraum 8 ein möglichst kleines Totraumvolumen aufweist, das von der Membran 7 bei ihrer Verformung nicht ausgefüllt werden kann.

Figur 9 zeigt eine vereinfachte Querschnittsansicht des Pumpenkopfes 3, mit darin montierten ersten und zweiten Rückschlagventilen 11, 12. Die hierin gezeigte Membran ist aus einem metallischen Membrankörper 7a hergestellt, der auf der Seite des Förderraums plan ist und auf der Seite des Druckraums wellenartige Stufen aufweist. Durch die wellenartigen Stufen ist eine elastische Verformbarkeit des metallischen Membrankörpers gewährleistet.

Aus der Anordnung der Rückschlagventile 11, 12 gemäß Figur 9 ist ersichtlich, dass sich die Kugelsitze dieser Ventile in unmittelbarer Nähe zur Oberfläche des Pumpenkopfes 3 angrenzend zur Membran befinden. Dies führt dazu, dass die Bohrungen 54, die in dem Pumpenkopf 3 von Kugelsitz bis in den Förderraum 8 führen, sehr kurz sind. Die Membran 7 kann sich beim Trockenansaugen nicht in die Bohrungen 54 hinein verformen. Wegen der kurzen Länge der Bohrungen ist jedoch das dadurch gebildete Totraumvolumen minimal bzw. vernachlässigbar.

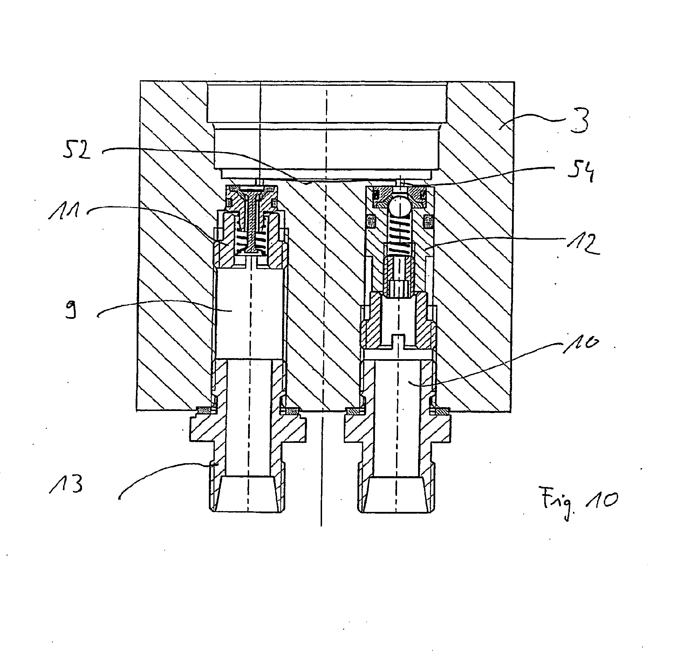

In Figur 10 ist der Pumpenkopf 3 ebenfalls in einer Querschnittsansicht gezeigt. Hierin sind die ersten und zweiten Rückschlagventile 11, 12 ebenfalls geschnitten dargestellt, um deren Funktionsweise zu illustrieren. Wie anhand der Figur 1 bereits erläutert, sind am unteren Teil des Pumpenkopfes 3 die Kupplungsstutzen 13 befestigt. An dem entgegengesetzten Teil des Pumpenkopfes 3, d.h. angrenzend zum Pumpenkörper 2 weist der Pumpenkopf 3 Ausdrehungen 55 auf, die zur Aufnahme einer Stirnseite des Pumpenkörpers 2 (vgl. Figur 1) dienen. In Figur 10 ist der Pumpenkörper 2 zur Vereinfachung nicht gezeigt.

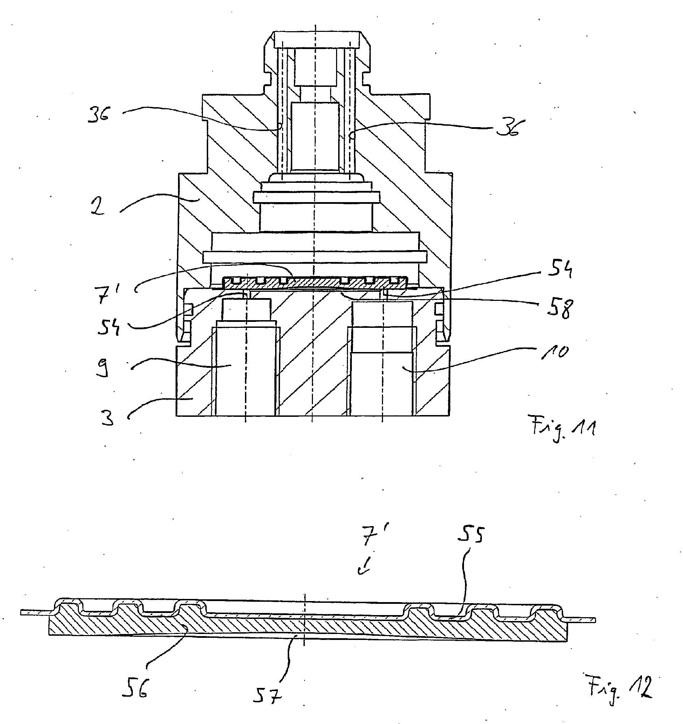

In den Figuren 11 und 12 ist eine erfindungsgemäße Membran für eine hydraulisch angetriebene Membranpumpe erläutert. Figur 12 zeigt eine Querschnittsansicht durch eine solche Membran 7'. Die Membran 7' zeigt einen Hybridaufbau und umfaßt einen metallischen Membrankörper 55 mit wellenartigen Stufen. An den metallischen Membrankörper 55 ist ein Elastomergummi 56 befestigt, das an seiner Oberfläche eine Ausnehmung 57 in Form einer Kalotte aufweist. Bei Verwendung einer solchen Membran 7' ist die Oberfläche des Pumpenkopfes 3 angrenzend zur Membran im wesentlichen planar ausgebildet und nicht mit einer Ausnehmung versehen. Die Ausnehmung 57 in dem Elastomergummi erfüllt die gleiche Funktion wie die vorstehend erläuterte Ausnehmung 52 in der Oberfläche des Pumpenkopfes 3. In ihrem entspannten Zustand schließt die Kalotte 57 des Elastomergummis 56 mit der gegenüberliegenden Oberfläche des Pumpenkopfes 3 ein Volumen ein, das ein exaktes Fördervolumen für das zu dosierende flüssige Medium definiert. Zu Beginn des Trockenansaugens wird die Hybridmembran 7' gegen den Pumpenkopf 3 gedrückt, so dass sich der metallische Membrankörper 55 und das Elastomergummi 56 soweit verformen, dass die Membran 7' im wesentlichen vollständig an der Oberfläche des Pumpenkörpers 3 anliegt. Hierdurch wird Luft aus dem Förderraum 8 herausgedrückt, um bei dem anschließenden Saughub einen größeren Unterdruck erzeugen zu können.

Figur 11 zeigt den Einbau der Hybridmembran 7' in der Membranpumpe 1. Zur Erzielung von verbesserten Fördereigenschaften der Membranpumpe 1 ist in der Oberfläche des Pumpenkopfes 3 angrenzend zur Hybridmembran 7' eine längliche Nute 58 ausgebildet, die sich zwischen den jeweiligen Mündungen des Ansaugkanals 9 bzw. des Ausstoßkanals 10 erstreckt. Die längliche Nute 58 unterstützt ein Strömen des flüssigen Mediums innerhalb des Förderraums 8 von dem Ansaugkanal 9 zum Ausstoßkanal 10. Jedoch ist die längliche Nute in ihrer Breite bzw. Tiefe mit kleinen Abmessungen versehen, so dass durch sie das Totraumvolumen innerhalb des Förderraums nur unwesentlich vergrößert wird.

Bei einer Dosierung eines nur kleinen Fördervolumens des flüssigen Mediums ist von Bedeutung, dass die Rückschlagventile, die in dem Ansaugkanal bzw. dem Ausstoßkanal vorgesehen sind, bereits bei geringen Kräften und dennoch präzise ansprechen. Zusätzlich ist für ein gutes Ansprechverhalten der Membranpumpe ein nur geringes Totraumvolumen der Rückschlagventile wichtig.

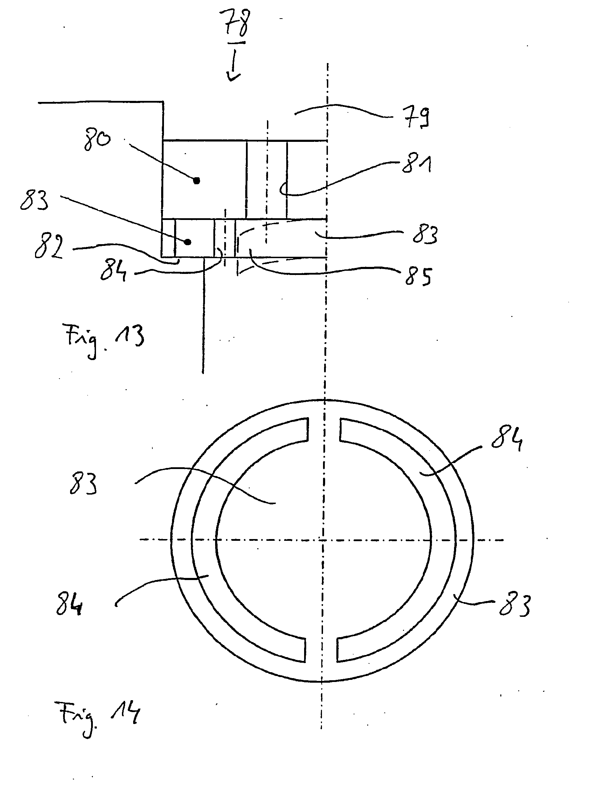

In den Figuren 13 bis 15b ist ein erfindungsgemäßes Rückschlagventil 78 gezeigt, das die soeben genannten Anforderungen erfüllt.

Fig. 13 zeigt das Rückschlagventil 78 in einer Querschnittsansicht in einer Hälfte. In einem Gehäuse des Rückschlagventils ist eine Durchgangsöffnung 79 ausgebildet, in die eine Haltescheibe 80 eingepresst ist. Die Haltescheibe weist zwei Bohrung 81 auf, die die Haltescheibe ihrer Höhe nach durchsetzten, also in einer Durchflussrichtung X des Rückschlagventils. Die Bohrungen 81 sind azentrisch angeordnet. In der Darstellung gemäß Fig. 13 ist wegen des symmetrischen Aufbaus des Rückschlagventil entlang seiner Längsachse nur eine der beiden Bohrungen 81 im Schmitt gezeigt.

Das Gehäuse weist eine stufenförmige Ausnehmung auf, mit einer Stufe 82, die den Durchmesser der Durchgangsöffnung 79 verringert. Das Rückschlagventil 78 umfasst eine Scheibenmembran 83, die auf der Stufe 82 aufsitzt. Die Haltescheibe 80 ist angrenzend zur Scheibenmembran 83 in die Durchgangsöffnung 79 eingepresst. Dadurch ist die Scheibenmembran fest in der Durchgangsöffnung 79 gehalten.

Die Scheibenmembran 83 ist von zwei Öffnungen 84 durchsetzt, von denen in der Schnittansicht gemäß Fig. 13 nur eine Öffnung gezeigt ist. In der Draufsicht von Fig. 14 ist zu erkennen, dass die beiden Öffnungen 84 im Form eines Halbkreises ausgebildet sind. Ein Rand der jeweiligen Öffnungen ist angrenzend zum Umfangsrand der Scheibenmembran 83 angeordnet. Durch die Öffnungen 84 entsteht jeweils ein Steg 85, der sich radial nach innen zum Zentrum der Scheibenmembran 83 erstreckt. Die Stege sind jeweils elastisch in einer Richtung im Wesentlichen senkrecht zur Längserstreckung der Scheibenmembran 83 verformbar, wie in Fig. 13 durch getrichelte Linien angedeutet. Hierzu ist die Scheibenmembran aus einem biegeelastischen Blech hergestellt.

Die Öffnungen 84 der Scheibenmebran sind radial versetzt zu den jeweiligen Bohrungen 81 der Haltescheibe 80 angeordnet. Somit sind die Bohrungen 81 im Schließzustand des Rückschlagventils 78 von der daran anliegenden Scheibenmembran 83 abgedeckt und verschlossen, wie in Fig. 13 durch Vollinien gezeigt.

Das Rückschlagventil 78 funktioniert wie folgt:

Wenn ein auf der Seite der Haltescheibe 80 anstehendes Fluid einen durch die Federrate der Scheibenmembran bestimmten Öffnungsdruck überschreitet, werden die Stege 85 entsprechend zur druckabgewandten Seite (in fig. 13 nach unten, getrichelt gezeigt) aufgebogen. Das Fluid kann dann durch die Bohrungen 81 und die Öffnungen 84 auf die druckabgewandte Seite abströmen. Der Öffnungsdruck, ab dem die Stege zum Öffnen des Rückschlagventils 78 von der Haltescheibe 80 abheben, lässt sich durch die geometrischen Verhältnisses der Öffnungen 84, das Grundmaterial der Scheibenmembran und dessen Dicken spezifizieren. Durch die beiden halbkreisförmigen Öffnungen 84 und die Stege 85 stellt sich ein großer Durchsatz durch das Rückschlagventil 78 ein, in Verbindung mit einem guten Ansprechverhalten bei bereits geringen Fluiddrücken.

Die Haltescheibe 78 ist auf ihrer der Membran zugewandten Seite mit einer (nicht gezeigten) Elastomerschicht versehen, an der die Stege 85 der Scheibenmembran 83 im Schließzustand des Rückschlagventils 78 anliegen. Dies verbessert das Geräuschverhalten und die Dichtigkeit des Rückschlagventils 78. Die Scheibenmembran kann zusätzlich oder alternativ zur Haltescheibe 78 an ihrer der Haltemembran zugewandten Seite mit dem Elastormermaterial beschichtet sein, woraus die ebenfalls die vorstehend genannten Vorteil ergeben.

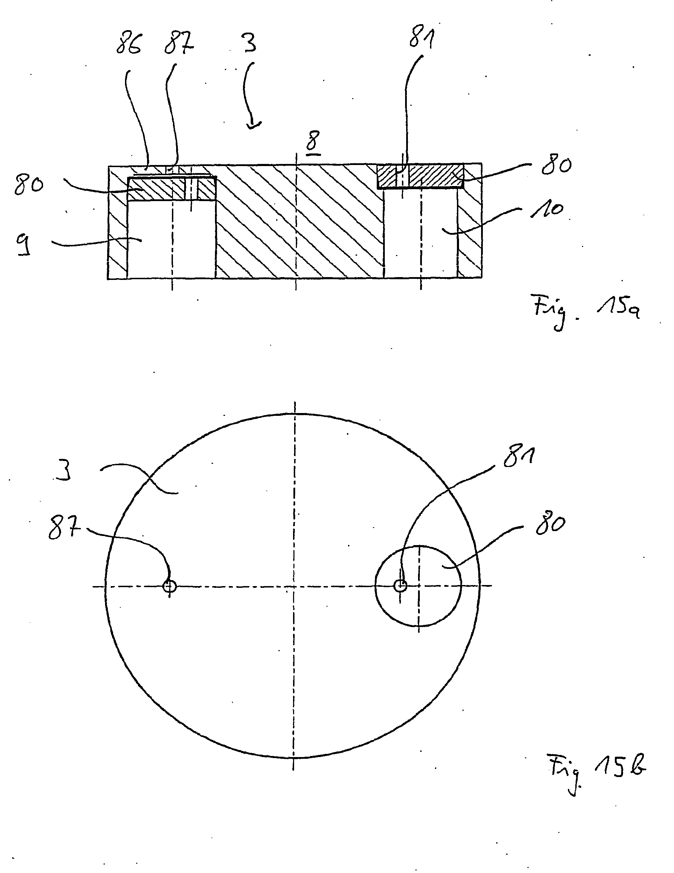

Fig. 15a zeigt den Pumpenkopf 3 mit dem Ansaugkanal 9 und dem Ausstosskanal 10 in einer vereinfachten Querschnittsansicht. Das Rückschlagventil 78 ist jeweils in dem Ansaugkanal 9 und dem Ausstosskanal 10 eingebaut. Hierbei fungieren die Kanäle 9, 10 jeweils als Gehäuseteil für das Rückschlagventil 78, wobei die Durchgangsöffnung (Fig. 13) durch den Innenraum der Kanäle gebildet wird. In der Schnittansicht ist nur eine der beiden Bohrungen 81 der Haltescheibe 80 gezeigt. Es versteht sich, dass das Rückschlagventil 78 in dem Ausstosskanal 10 im Vergleich zum Ansaugkanal 9 um 180° gedreht eingebaut ist. Die Darstellung des Rückschlagventils 78 in Fig. 13 entspricht einem Einbau in dem Ausstosskanal, da sich der Steg 85 beim Öffnen des Ventiles nach unten aufbiegt.

Das Rückschlagventil 78 weist eine geringe Bauhöhe auf, so dass bei einem Einbau in dem Pumpenkopf 3 ein entsprechend geringes Totraumvolumen resultiert. In Fig. 15a ist zu erkennen, dass das Rückschlagventil 78 auf Seiten des Ausstosskanals mit der Bohrung 81 unmittelbar angrenzend an eine Oberfläche des Pumpenkopfes, und damit an den Förderraum 8 angeordnet ist. Auf Seiten des Ansaugkanals ist lediglich ein dünner Materialsteg 86 oberhalb der Scheibenmembran 83 erforderlich, um die Stufe 82 bzw. eine Halterung zum Aufliegen der Scheibenmembran zu bilden. In dem Materialsteg 86 ist eine Öffnung 87 ausgebildet, um eine Fluidverbindung zwischen dem Ansaugkanal 9 zum Förderraum 8 durch das Rückschlagventil 78 hindurch zu schaffen. Die geringe Höhe des Materialstegs 86 gewährleistst für die Seite des Ansaugkanals ebenfalls ein nur geringes Totraumvolumen.

In der Fig. 15b ist der Pumpenkopf 3 nochmals in einer Draufsicht gezeigt, aus Richtung des Pfeils C von Fig. 15a.

Alternativ zur vorstehend erläuterten Ausführungsform, und in Entsprechung Darstellung von Fig. 15a, ist es auch möglich, in der Haltescheibe 80 nur eine azentrische Bohrung 81 vorzusehen. Hierdurch ist die Herstellung der Haltescheibe 80 vereinfacht.

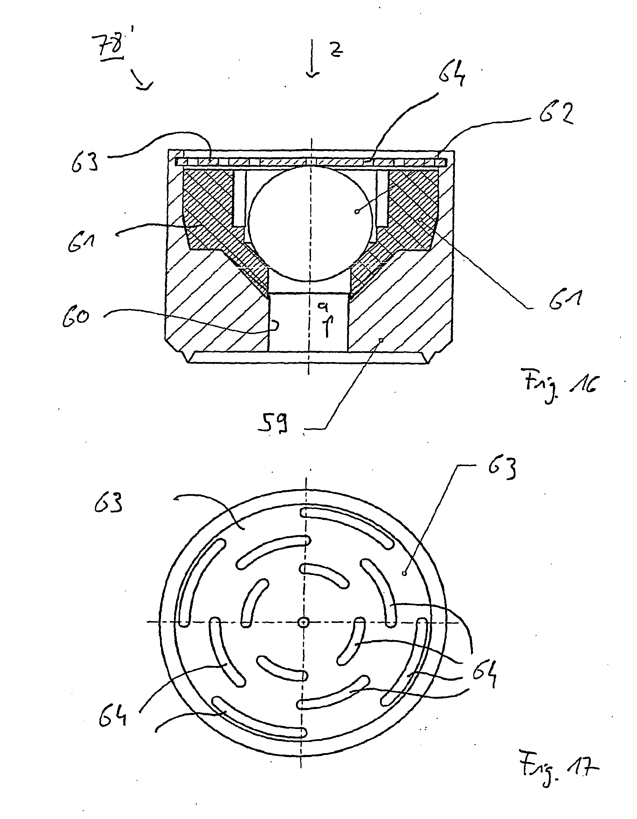

In den Figuren 16 bis 21 sind eine erfindungsgemäße Federmembran bzw. eine weitere Ausführungsform eines erfindungsgemäßes Rückschlagventils 78' erläutert, bei denen eine sehr geringe Ansprechkraft zum Öffnen des Ventils und zugleich ein geringes Totraumvolumen für den Förderraum 8 erzielt wird.

Figur 16 zeigt eine Querschnittsansicht des erfindungsgemäßen Rückschlagventils 78'. Es versteht sich, dass es sich hierbei um das erste Rückschlagventil 11 in dem Ansaugkanal 9 oder um das zweite Rückschlagventil 12 in dem Ausstoßkanal 10 handeln kann. Das Rückschlagventil 78' umfaßt einen Gehäuseeinsatz 59, der aus Kunststoff oder aus Metall bzw. Stahl, insbesondere Edelstahl hergestellt ist. Der Gehäuseeinsatz 59 ist mit seiner Außenumfangsfläche in den Ansaugkanal 9 bzw. den Ausstoßkanal 10 aufgenommen und darin eingepaßt. Der Gehäuseeinsatz 59 ist entlang seiner Längsachse von einer Durchgangsöffnung 60 durchsetzt, die ein Durchströmen eines Fluides oder dergleichen ermöglicht. In dem Gehäuseeinsatz 59 ist in der Durchgangsöffnung 60 ein Dichtungselement 61, zum Beispiel in Form einer Gummidichtung eingefaßt. Die Gummidichtung 61 verjüngt sich in ihrem unteren Teil in Form eines Trichters. Auf den Flanken dieses Trichters sitzt eine Kugel 62, zum Beispiel eine Edelstahlkugel auf.

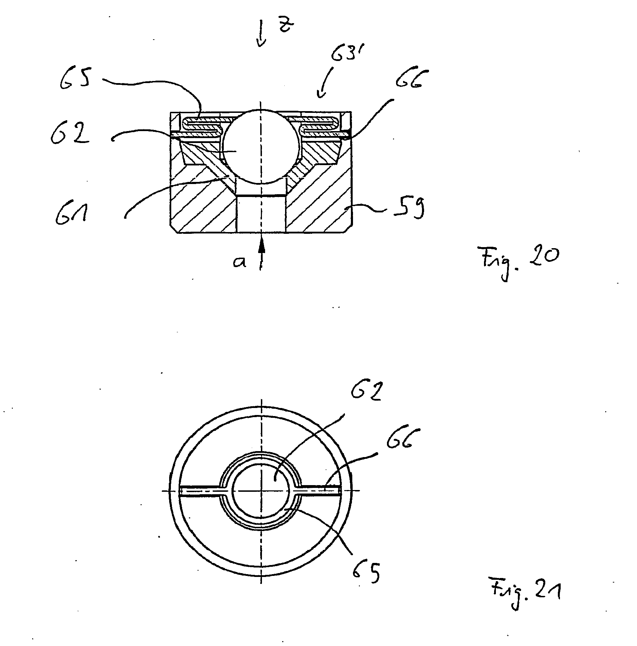

An einem Rand des Gehäuseeinsatzes 59 entgegengesetzt zur trichterförmigen Verjüngung der Gummidichtung 61 ist eine Membranfeder 63 gehalten, die mit ihrem Umfangsrand in eine Nut oder dergleichen einfaßt. Im Schließzustand des Rückschlagventils drückt die Membranfeder 63 von oben auf die Kugel 62, so dass diese auf den Flanken der trichterförmigen Verjüngung der Gummidichtung 61 aufliegt. Aus Richtung des Pfeils z gemäß Figur 16 kann das Rückschlagventil nicht durchströmt werden, da die Kugel 62 mit der Gummidichtung 61 sperrt. Falls ein Druck aus der Richtung des Pfeils a gemäß Figur 16 groß genug ist, wird die Kugel 62 gegen die Vorspannung der Membranfeder 63 nach oben aus der trichterförmigen Verjüngung der Gummidichtung 61 herausgehoben. Der Pfeil a in Fig. 20 zeigt also die Durchströmungsrichtung des Rückstromventils 78' an. Analog zu einem Überdruck aus Richtung des Pfeils a kann die Kugel 62 auch durch einen Unterdruck, der aus Richtung des Pfeils z wirkt, zum Öffnen des Ventiles von der Gummidichtung 61 abheben.

Figur 17 zeigt die Membranfeder 63 in einer Draufsicht. Die Membranfeder 63 ist mit einer Vielzahl von kreissegmentförmig verlaufenden Ausnehmungen 64 durchsetzt. Die Mehrzahl der Ausnehmungen 64 schwächen die Membranfeder 63 in Bezug auf die Federkraft in einer Richtung senkrecht zur Flächenausdehnung der Membranfeder 63. Je mehr Ausnehmungen 64 die Membranfeder 63 aufweist, desto flacher verläuft die entsprechende Federkennlinie. Im Vergleich zu einer Membranfeder, die keine Ausnehmungen aufweist, läßt sich die Membranfeder 63 gemäß Figur 16 bzw. 17 leichter in einer Richtung quer zu ihrer Flächenerstreckung verformen. Hieraus resultiert für das Rückschlagventil 11 bzw. 12 eine kleinere Zuhaltekraft und ein besseres Ansprechvermögen bei geringen Druckkräften.

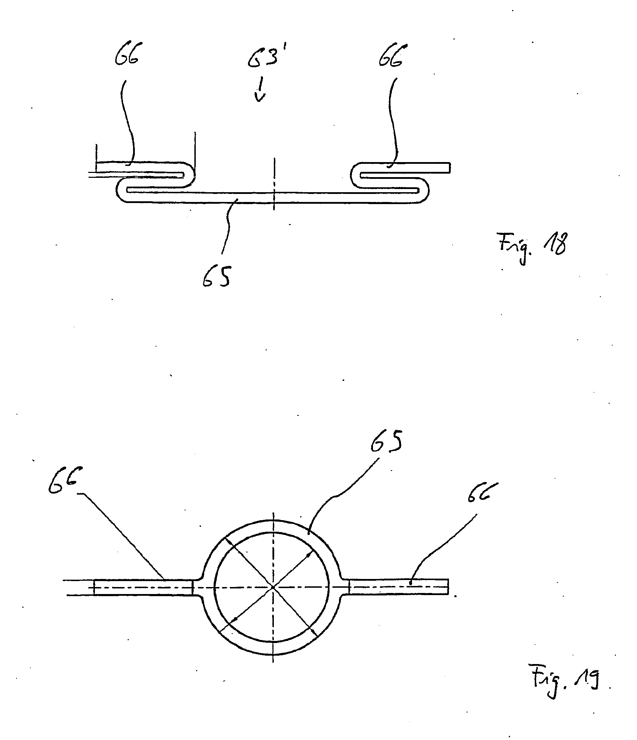

In den Figuren 18 und 19 ist die Membranfeder in einer weiteren Ausführungsform 63' gezeigt. Gegenüber der Membranfeder 63 gemäß Figur 17 ist diese Ausführungsform 63' nicht in Form einer Platte, sondern ringförmig ausgebildet, wobei ein Ring 65 der Membranfeder 63' an der Kugel 62 anliegt. Seitlich an dem Ring 65 sind an entgegengesetzten Seiten S-förmig verlaufende Federschenkel 66 angeformt, die nach Art einer Blattfeder wirken. In Figur 20 ist der Einbau der Membranfeder 63' in den Gehäuseeinsatz 59 gezeigt. Die Federschenkel 66 sind mit ihren freien Enden in einer Nute des Gehäuseeinsatzes 59 eingefaßt. Bei einem ausreichend hohen Druck aus der Richtung a von Figur 20 drückt die Kugel 62 von unten gegen den Ring 65 der Membranfeder 63', wodurch sich die Federschenkel 66 verformen. Dabei hebt die Kugel 62 von der trichterförmigen Verjüngung der Gummidichtung 61 ab, so dass ein Fluid das Rückschlagventil 11, 12 in Richtung des Pfeils a durchströmt. Das Schließen dieser Ausführungsform funktioniert analog zur Erläuterung von Figur 16. Falls das Ventil drucklos ist oder aber aus Richtung des Pfeils a ein Fluiddruck kleiner als die Federkraft ist, drückt die Membranfeder 63' die Kugel 62 gegen die Gummidichtung und verschließt das Ventil.

Figur 21 zeigt das Rückschlagventil 78' von Figur 20 in einer Draufsicht. Die Kugel 62 ist mittig durch den Ring 65 eingefaßt, der mit seinen seitlich angeformten Federschenkeln 66 in dem Gehäuseeinsatz 59 gehalten ist.

Das vorstehend erläuterte Rückschlagventil 78' hat neben einem sehr guten Ansprechverhalten bei nur geringen Druckkräften den weiteren Vorteil, dass es wegen der Verwendung der Membranfeder 63 zum Vorspannen der Kugel 62 eine geringe Bauhöhe aufweisen. Der Kugelsitz befindet sich unmittelbar angrenzend an einer stirnseitigen Öffnung des Rückschlagventils, die bei einem Durchströmen des Ventils stromabwärts liegt. Aus der geringen Bauhöhe eines solchen Rückschlagventils 78' resultiert ein entsprechend kleines Totraumvolumen für den Förderraum 8, so dass das Trockenansaug-Verhalten der Membranpumpe verbessert ist.

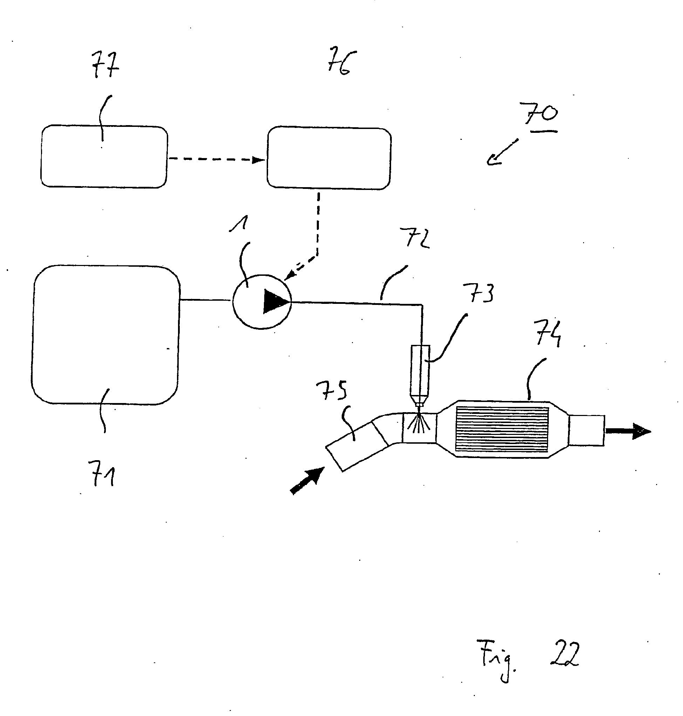

In Figur 22 ist ein erfindungsgemäßes System 70 zur Nachbehandlung eines Abgases eines Verbrennungsmotors mit einem Reduktionsmittel gezeigt. Das System 70 arbeitet nach dem Prinzip des SCR-Verfahrens, bei dem ein Reduktionsmittel in Form einer wässrigen Harnstoff-Wasser-Lösung in die Abgase eines Dieselmotors stromaufwärts eines SCR-Katalysators eingespritzt wird.

Mit dem erfindungsgemäßen System 70 können die Grenzwertstufen Euro 4 und Euro 5 eingehalten und die einleitend genannten Vorteile des SCR-Verfahrens erzielt werden. Die Membranpumpe 1 eignet sich aufgrund der genannten Medientrennung zwischen Druckraum 5 und Förderraum 8 vorzüglich zum Dosieren eines aggressiven Reduktionsmittels, zum Beispiel AdBlue^{™}.

Nachstehend ist das System 70 im Detail erläutert.

Das System 70 umfaßt einen Tank 71, in dem die Harnstoff-Wasser-Lösung enthalten ist. Eine Verbindungsleitung 72 führt zu einer Einspritzdüse 73, die stromaufwärts eines Katalysators 74 an einem Abgasrohr 75 eines (nicht gezeigten) Diesel-Verbrennungsmotors befestigt ist. In der Verbindungsleitung 72 ist eine Membranpumpe 1 angeordnet, die oebn unter Bezugnahme auf die Figuren 1, 2, und insbesondere die Fig. 6 und 7 erläutert ist. Die Membranpumpe 1 dient in dem System 70 als Dosierpumpe, um die Harnstoff-Wasser-Lösung aus dem Tank 71 an die Einspritzdüse 73 zu dosieren und in das Abgasrohr 75 einzuspritzen.

Die Membranpumpe 1 ist an eine Steuereinheit 76 angeschlossen, die wiederum an eine Motorsteuerung 77 angeschlossen ist. Mittels der Steuereinheit wird das Bestromen der Magnetspule 26 gesteuert, um dadurch einen Hub und eine Frequenz für den Ankerkolben 23 einzustellen. Hieraus resultiert ein veränderliches Fördervolumen für die Harnstoff-Wasser-Lösung. Das bei der obigen Erläuterung der Membranpumpe 1 sogenannte flüssige Medium ist bei dem System 17 als die wässrige Harnstoff-Wasser-Lösung zu verstehen.

Die Steuereinheit 76 kann über die Motorsteuerung 77 an verschiedene Betriebszustände des Motors, wie z.B. Leerlauf, Vollgas oder dergleichen, angepaßt werden. Hierdurch können für die Membranpumpe 1 verschiedene Betriebszustände erzielt werden, die an den jeweiligen Motor-Betriebszustand angepaßt sind, in Bezug auf die Menge der einzuspritzenden Harnstoff-Wasser-Lösung.

Das System 70 weist nur eine Verbindungsleitung 72 auf, die von dem Tank 71 zur Einspritzdüse 73 führt. Es ist keine weitere Rückleitung von der Düse 73 zurück zum Tank 71 vorgesehen. Mit der Membranpumpe 1 lassen sich ausreichend hohe Drücke erzielen, so dass die Harnstoff-Wasser-Lösung mit der gewünschten Dispersion in das Abgasrohr 75 eingespritzt wird. Beispielsweise können mit der Membranpumpe 1 Drücke von größer als 10 bar erzeugt werden.

Mit der erfindungsgemäßen Membranpumpe 1 und ihren zugehörigen erfindungsgemäßen Komponenten ist eine äußerst präzise und Gegendruck unabhängige Dosierung von Fluiden bis hin zu mehreren Atmosphären Gegendruck möglich, zum Beispiel mit Druckwerten von größer als 10 bar. Durch die Trennung des Druckraums 5 von dem Förderraum 8 mittels der Membran 7 ist auch ein Dosieren von aggressiven Medien, zum Beispiel einer wässrigen Harnstoff-Wasser-Lösung, möglich. Mit der Schmierung des Ankerkolbens 23 und des Förderkolbens 15 durch die Hydraulikflüssigkeit 6 wird eine lange Lebensdauer der Membranpumpe in Folge eines geringen Verschleißes der bewegten Elemente erzielt. Ein weiterer Vorteil der Membranpumpe 1 besteht in einem exzellenten Trockenansaugen zur Beginn des Dosierbetriebs dank eines minimierten Totraumvolumens und eines genau definierten Fördervolumens innerhalb des Förderraums 8. Infolge des Ausgleichsvolumens, das in der Zusatzkammer 44 erzeugt werden kann durch die Zusatzmembran 46 bzw. die Kapsel 50, ist ein lagerunabhängiger Betrieb der Membranpumpe 1 möglich. Dies ist insbesondere beim Einbau in Kraftfahrzeugen vorteilhaft.

## Patentansprüche

1. System (70) zur Nachbehandlung eines Abgases eines Verbrennungsmotors mit einem Reduktionsmittel, umfassend
einen Tank (71), der das Reduktionsmittel enthält,
einen von dem Abgas durchströmten Katalysator (74), der an ein Abgasrohr (75) angeschlossen ist,
eine Düse (73), die stromaufwärts des Katalysators (74) in das Abgasrohr (75) mündet, wobei der Tank (71) für das Reduktionsmittel über eine Leitung (72) mit der Düse (73) verbunden ist, und
eine in der Leitung (72) angeordnete Dosierpumpe, die das Reduktionsmittel von dem Tank (71) unter Druck zur Düse (73) fördert, um das Reduktionsmittel mittels der Düse in das Abgasrohr (75) einzuspritzen,
**dadurch gekennzeichnet, dass**
die Dosierpumpe eine hydraulisch angetriebene Membranpumpe (1) ist, die einen in Richtung der Membran (7) längsverschieblichen Kolben (15) aufweist, der die Membran (7) mit Hydraulikflüssigkeit beaufschlagt, wobei die Membranpumpe einen Hubmagneten mit einem von einer Magnetspule (26) eingeschlossenen Ankerkolben (24) umfasst, durch den der Kolben (15) zumindest in Richtung der Membran (7) antreibbar ist.

2. System nach Anspruch 1, bei dem die Düse nur über die eine Leitung mit dem Tank verbunden ist.

3. System nach Anspruch 1 oder 2, bei dem allein durch die Membranpumpe ein Druck erzeugt wird, der für ein Einspritzen des Reduktionsmittels in das Abgasrohr ausreichend hoch ist.

4. System nach Anspruch 3, bei dem der durch die Membranpumpe erzeugte Druck größer als 2 bar, insbesondere größer als 5 bar, und insbesondere größer als 10 bar ist.

5. System nach einem der Ansprüche 1 bis 4, bei dem das Reduktionsmittel eine Harnstofflösung oder eine Harnstoff-Wasser-Lösung ist.

6. System nach einem der Ansprüche 1 bis 5, bei der die Membranpumpe an eine Motorsteuerungseinrichtung angeschlossen ist, die die Membranpumpe in Abhängigkeit eines Betriebszustands des Verbrennungsmotors antreibt.

7. System nach einem der Ansprüche 1 bis 6, bei dem der Katalysator ein SCR-Katalysator ist.

8. Verwendung eines Systems nach einem der Ansprüche 1 bis 7 zur Abgas-Nachbehandlung bei Dieselkraftfahrzeugen.

## Claims

1. A system (70) for the aftertreatment of an exhaust gas of an internal combustion engine with a reduction agent, comprising
a tank (71) which contains the reduction agent,
a catalytic converter (74) which is connected to an exhaust pipe
(75) and through which the exhaust gas flows,
a nozzle (73) which, upstream of the catalytic converter (74), leads into the exhaust pipe (75), wherein the tank (71) for the reduction agent is connected to the nozzle (73) by way of a line (72), and
a metering pump which is arranged in the line (72) and feeds the reduction agent under pressure from the tank (71) to the nozzle (73) in order to inject the reduction agent into the exhaust pipe (75) by means of the nozzle,
**characterised in that**
the metering pump is a hydraulically driven diaphragm pump (1) which has a piston (15) which is longitudinally displaceable in the direction of the diaphragm (7) and acts on the diaphragm (7) with hydraulic fluid, the diaphragm pump comprising an electric lifting magnet having an armature piston (24) which is surrounded by a magnet coil (26) and by means of which the piston (15) may be driven at least in the direction of the diaphragm (7).

2. A system according to Claim 1, in which the nozzle is connected to the tank only by way of the one line.

3. A system according to Claim 1 or 2, in which, by means of the diaphragm pump alone, a pressure is generated which is sufficiently high to inject the reduction agent into the exhaust pipe.

4. A system according to Claim 3, in which the pressure generated by the diaphragm pump is greater than 2 bar, especially greater than 5 bar, and in particular greater than 10 bar.

5. A system according to one of Claims 1 to 4, in which the reduction agent is a urea solution or a urea-water solution.

6. A system according to one of Claims 1 to 5, in which the diaphragm pump is connected to a motor-control device which drives the diaphragm pump in dependence on an operating status of the internal combustion engine.

7. A system according to one of Claims 1 to 6, in which the catalytic converter is an SCR catalytic converter.

8. The use of a system according to one of Claims 1 to 7 for exhaust gas aftertreatment in diesel motor vehicles.

## Revendications

1. Système (70) de retraitement d'un gaz d'échappement d'un moteur à combustion, avec un moyen de réduction, comprenant:
un réservoir (71) qui contient le moyen de réduction,
un catalyseur (74) parcouru par le gaz d'échappement, qui est relié à un tuyau (75) d'échappement,
une buse (73) qui débouche dans le tuyau (75) d'échappement en amont du catalyseur (74), le réservoir (71) pour le moyen de réduction étant relié à la buse (73) par l'intermédiaire d'une conduite (72), et
une pompe de dosage disposée dans la conduite (72), laquelle achemine le moyen de réduction sous pression depuis le réservoir (71) jusqu'à la buse (73), pour injecter le moyen de réduction dans le tuyau (75) d'échappement au moyen de la buse,
**caractérisé en ce que**
la pompe de dosage est une pompe à membrane (1) entraînée hydrauliquement, laquelle présente un piston (15) mobile longitudinalement dans la direction de la membrane (7), lequel met en pression la membrane (7) avec du fluide hydraulique, la pompe à membrane comprenant un aimant de levage comportant un piston induit (24) entouré par une bobine d'induction (26), par lequel le piston (15) peut être entraîné au moins dans la direction de la membrane (7).

2. Système selon la revendication 1, dans lequel la buse est reliée au réservoir uniquement par l'intermédiaire de la conduite.

3. Système selon la revendication 1 ou 2, dans lequel une pression est produite par la pompe à membrane seule, laquelle pression est suffisamment haute pour une injection du moyen de réduction dans le tuyau d'échappement.

4. Système selon la revendication 3, dans lequel la pression produite par la pompe à membrane est plus grande que 2 bars, en particulier plus grande que 5 bars, et en particulier plus grande que 10 bars.

5. Système selon l'une des revendications 1 à 4, dans lequel le moyen de réduction est une solution d'urée, ou une solution d'urée-eau.

6. Système selon l'une des revendications 1 à 5, dans lequel la pompe à membrane est reliée à un équipement de commande du moteur, qui entraîne la pompe à membrane en fonction d'un état de fonctionnement du moteur à combustion.

7. Système selon l'une des revendications 1 à 6, dans lequel ledit catalyseur est un catalyseur SCR.

8. Utilisation d'un système selon l'une des revendications 1 à 7, pour le retraitement de gaz d'échappement dans le cas de véhicules automobiles Diesel.
